(19) Europäisches Patentamt / European Patent Office / Office européen des brevets

(11) **EP 3 707 111 B1**

(12) **FASCICULE DE BREVET EUROPEEN**

(45) Date de publication et mention
de la délivrance du brevet:
**26.02.2025 Bulletin 2025/09**

(21) Numéro de dépôt: **18812243.6**

(22) Date de dépôt: **07.11.2018**

(51) Classification Internationale des Brevets (IPC):
**C04B 28/06** *(2006.01)* **C04B 7/32** *(2006.01)*

(52) Classification Coopérative des Brevets (CPC):
(C-Sets disponibles)
**C04B 7/323; C04B 28/065; Y02P 40/10** (Cont.)

(86) Numéro de dépôt international:
**PCT/FR2018/052747**

(87) Numéro de publication internationale:
**WO 2019/092360 (16.05.2019 Gazette 2019/20)**

(54) **LIANT ETTRINGITIQUE POUR LA FABRICATION DE MATÉRIAUX DE CONSTRUCTION ET PROCÉDÉ DE SA PRÉPARATION**

ETTRINGIT-BINDEMITTEL ZUR HERSTELLUNG VON BAUSTOFFEN UND VERFAHREN ZU SEINER HERSTELLUNG

ETTRINGITE BINDER FOR PRODUCING CONSTRUCTION MATERIALS AND METHOD FOR PREPARING IT

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **07.11.2017 FR 1760422**

(43) Date de publication de la demande:
**16.09.2020 Bulletin 2020/38**

(73) Titulaire: **Hoffmann Green Cement Technologies**
**85310 Rives de l'Yon (FR)**

(72) Inventeur: **HOFFMANN, David**
**53410 Saint-Ouën-des-Toits (FR)**

(74) Mandataire: **Icosa**
**83 avenue Denfert-Rochereau**
**75014 Paris (FR)**

(56) Documents cités:
**EP-A1- 3 067 338       DE-U1- 29 701 606**
**US-A1- 2014 360 721**

(52) Classification Coopérative des Brevets (CPC):
(Cont.)

C-Sets
**C04B 28/065, C04B 14/106, C04B 22/064,
C04B 22/143**

## Description

### DOMAINE DE L'INVENTION

La présente invention concerne le domaine des matériaux de construction. En particulier, la présente invention concerne un procédé de préparation d'un liant ettringitique à partir d'une source d'aluminosilicate, d'une source de sulfate de calcium et d'une source d'hydroxyde de calcium (ou chaux éteinte, CH) ; ledit liant comprenant un catalyseur et un activateur.

La présente invention concerne également l'utilisation du liant ettringitique obtenu par le procédé de l'invention pour fournir des ciments, des ciments à maçonner, des mortiers, des bétons, des liants routiers et/ou des chaux formulées.

### ÉTAT DE LA TECHNIQUE

La préparation de matériaux de construction tels que par exemple le béton ou le ciment, nécessite de disposer de liants toujours plus innovants pour répondre aux besoins accrus en la matière.

Parmi les liants connus et utilisés, les liants ettringitiques ont l'avantage lorsqu'ils sont mélangés à de l'eau, de durcir rapidement pour fournir des matériaux présentant de faible retrait et une bonne résistance chimique.

Ces liants sont principalement préparés selon deux méthodes : soit par hydratation d'un clinker à base de Ye'elemite (WO88/04285), soit par formulation à partir d'un ciment alumineux (WO03/091179).

Le document US2014/360721 A vise à fournir un ciment à bas coût ayant des propriétés de durcissement et mécaniques adaptées à son utilisation dans le renfort de formations souterraines telles que des puits de forage gazéifère ou pétrolier. Il décrit une composition de ciment qui peut comprendre une source d'aluminosilicate, une source de sulfate de calcium, une source d'hydroxyde de calcium et un activateur tel qu'un acide hydrocarboxylique.

La première méthode, par hydratation, nécessite de fabriquer un clinker à des températures élevées (1200-1300°C). La seconde méthode, par formulation, nécessite quant à elle le recours à de nombreux adjuvants et des matières premières coûteuses.

Il existe donc un besoin pour fournir un procédé de préparation d'un liant ettringitique plus simple à mettre en œuvre et moins coûteux en énergie. En particulier, il existe un besoin pour fournir un procédé de préparation d'un liant ettringitique sans chauffage. Par ailleurs, il existe un besoin pour fournir un procédé plus économique, pouvant être réalisé à partir de matières premières facilement disponibles et peu onéreuses, et ayant une empreinte carbone moins élevée que les procédés de l'art antérieur. Dans ce but, la Demanderesse cherche notamment à fournir un procédé de liant ettringitique pouvant être obtenu sans l'emploi de ciment Portland. En effet, sa fabrication en plus de requérir de nombreuses ressources, produit une quantité non négligeable de polluants rendant son utilisation indésirable pour la préparation de liant avec une empreinte carbone réduite.

De manière surprenante, la Demanderesse a mis en évidence qu'un mélange comprenant au moins, une source d'aluminosilicate, une source de sulfate de calcium et de la chaux, caractérisé par un ratio stoechiométrique de sulfate de calcium (RMK) disponible dans le mélange compris dans une gamme de 0,05 à 1,25 ; et un taux de saturation en hydroxyde de calcium, Sat(CH), compris dans une gamme de 0,75 à 8, permet la préparation d'un liant ettringitique stable.

Par ailleurs, la Demanderesse a mis en évidence qu'un mélange comprenant au moins, une source d'aluminosilicate, une source de sulfate de calcium et une source d'hydroxyde de calcium, en présence d'un activateur choisi parmi les composés complexant les cations tels que le calcium, l'aluminium et/ou le silicium, permet d'obtenir des matériaux ayant des résistances à la compression plus élevées et avec de meilleurs rendements, qu'avec des liants ettringitiques classiques.

Avantageusement, le procédé de l'invention permet de fournir un liant ettringitique stable. Ainsi, lors de l'utilisation du liant ettringitique de l'invention, dans la fabrication d'un matériau de construction, celle-ci ne conduit pas au cours du temps à un quelconque gonflement dans le matériau final, tout en présentant de meilleures performances mécaniques que les liants pouzzolaniques classiques.

### RÉSUMÉ

La présente invention concerne donc un liant ettringitique comprenant:

- au moins une source d'aluminosilicate caractérisée par un indice d'activité pouzzolanique (IPZ) déterminé par la méthode de l'essai Chapelle, compris dans une gamme de 200 à 2200 mg/g ;
- au moins une source de sulfate de calcium ;
- au moins une source d'hydroxyde de calcium ;
- au moins un catalyseur alcalin choisi parmi le fluorure de sodium, l'aluminate de sodium, le phosphate trisodique, l'ortho-silicate de sodium, le métasilicate de sodium, l'hexafluorosilicate de sodium, le fluorophosphate de sodium, l'hexamétaphosphate de sodium, le carbonate de sodium, le borate de sodium, l'hexafluoroaluminate de sodium, le tétrafluoroaluminate de potassium ou leurs mélanges ; et

- au moins un activateur choisi parmi des composés aptes à complexer des cations, de préférence des composés aptes à complexer le calcium, l'aluminium et/ou le silicium

ledit liant ettringitique étant caractérisé par

- un taux de saturation en hydroxyde de calcium, noté Sat(CH), compris dans une gamme de 0,75 à 8 ; et
- un taux de sulfate de calcium, noté RMK, compris dans une gamme de 0,05 à 1,25 ; le paramètre RMK étant définie par l'équation suivante

$$RMK = \frac{[Qm(CS) \times 592000]}{IPZ \times Q(MK) \times 3}$$

dans laquelle :

IPZ représente l'indice pouzzolanique de la source d'aluminosilicate ;
Q(MK) représente la quantité en gramme d'aluminosilicates présents dans le liant ettringitique ; et

Selon un mode de réalisation, l'activateur est choisi parmi le saccharose, les acides alpha-hydroxylé ou leurs sels, les éthanolaniines ou leurs sels, et/ou les catéchols ou ses dérivés. Selon un mode de réalisation, le liant comprend en outre un catalyseur alcalin, de préférence le catalyseur alcalin est choisi parmi le fluorure de sodium, l'aluminate de sodium, le phosphate trisodique, l'ortho-silicate de sodium, le métasilicate de sodium, l'hexafluorosilicate de sodium, le fluorophosphate de sodium, l'hexamétaphosphate de sodium,le carbonate de sodium, le borate de sodium, l'hexafluoroaluminate de sodium, tétrafluoroaluminate de potassium ou leurs mélanges.

Selon un mode de réalisation, la quantité de catalyseur est comprise dans une gamme de plus de 0% à 20% en masse par rapport à la quantité totale du liant.

Selon un mode de réalisation, la source d'aluminosilicate est une pouzzolane, une fine issue de la production de chamotte ou des cendres de boues de papeterie, de préférence un métakaolin.

Selon un mode de réalisation, la source d'hydroxyde de calcium est de la chaux éteinte, de la chaux hydraulique, de la chaux vive, de la chaux vive à effet retardé, de la chaux aérienne, de la chaux éteinte classique ou toute chaux commerciale.

Selon un mode de réalisation, la source de sulfate de calcium est choisie parmi l'anhydrite, le gypse naturel ou le gypse obtenu comme sous-produit de réactions industrielles tel que le désulfogypse, le titanogypse, le fluogypse, ou le phosphogypse.

Selon un mode de réalisation, le liant comprend en outre des additifs, de préférence des laitiers, plus préférentiellement des laitiers de hauts fourneaux ou des laitiers d'aluminates amorphes.

La source d'aluminosiiicate est caractérisée par un indice d'activité pouzzolanique (IPZ) déterminé par la méthode de l'essai Chapelle, compris dans une gamme de 200 à 2200 mg/g.

Selon un mode de réalisation, le mélange (source d'aluminosiiicate/ source de sulfate de calcium/ source d'hydroxyde de calcium) comprend ou est constitué de :

- 50% en masse de métakaolin flashé ARGICEM® d'IPZ environ égal à 800 mg/g ;
- 25% en masse de chaux ; et
- 25% en masse de gypse, par rapport à la masse totale du mélange.

Selon un mode de réalisation, le mélange (source d'aluminosilicate," source de sulfate de calcium/ source d'hydroxyde de calcium) comprend ou est constitué de :

- 60% en masse de métakaolin flashé ARGICEM® d'IPZ environ égal à 800 mg/g ;
- 30% en masse de chaux ; et
- 10% en masse de gypse, par rapport à la masse totale du mélange.

La présente invention concerne également un procédé de préparation d'un liant tel que décrit précédemment, comprenant le mélange d'au moins :

- une source d'aluminosilicate caractérisée par un indice d'activité pouzzolanique (IPZ) déterminé par la méthode de l'essai Chapelle, compris dans une gamme de 200 à 2200 mg/g ;

- une source de sulfate de calcium ;
- une source d'hydroxyde de calcium ;
- au moins un catalyseur alcalin choisi parmi le fluorure de sodium, l'aluminate de sodium, le phosphate trisodique, l'ortho-silicate de sodium, le métasilicate de sodium, l'hexafluorosilicate de sodium, le fluorophosphate de sodium, l'hexamétaphosphate de sodium, le carbonate de sodium, le borate de sodium, l'hexafluoroaluminate de sodium, le tétrafluoroaluminate de potassium ou leurs mélanges ; et
- au moins un activateur choisi parmi des composés aptes à complexer des cations, de préférence des composés aptes à complexer le calcium, l'aluminium et/ou le silicium ; ledit liant ettringitique étant caractérisé par
- un taux de saturation en hydroxyde de calcium, noté Sat(CH), compris dans une gamme de 0,75 à 8 ; et
- un taux de sulfate de calcium, noté RMK, compris dans une gamme de 0,05 à 1,25 ; le paramètre RMK étant définie par l'équation suivante

$$RMK = \frac{[Qm(C\$) \times 592000]}{IPZ \times Q(MK) \times 3}$$

dans laquelle :

IPZ représente l'indice pouzzolanique de la source d'aluminosilicate ;
Q(MK) représente la quantité en gramme d'aluminosilicates présents dans le liant ettringitique ; et
Qm(C\$) représente la quantité en moles, de sulfate de calcium présent dans le liant ettringitique.

Selon un mode de réalisation, la température à laquelle est effectué le mélange est comprise de plus de 0°C à 50°C, de préférence de 10°C à 40°C, plus préférentiellement à environ 25°C.

La présente invention concerne également l'utilisation du liant ettringitique de l'invention tel que décrit précédemment, pour la préparation de ciments, de ciments à maçonner, de mortiers, de bétons, de liants routiers et/ou de chaux formulées.

DÉFINITIONS

Dans la présente invention, les termes ci-dessous sont définis de la manière suivante :

- « **Acide alpha-hydroxylé** » concerne un acide carboxylique comprenant un groupe hydroxyle (-OH) sur le carbone adjacent à la fonction carboxylique.

- « **Activateur** » concerne tout produit apte à augmenter le rendement de la réaction lors de la formation d'ettringite.

- « **Aluminosilicate** » concerne un composé chimique minéral de la famille des silicates dans lequel certains atomes de silicium (Si) ont été remplacés par des atomes d'aluminium.

- « **Anhydrite** » concerne un composé chimique minéral de sulfate de calcium anhydre, de formule brute $CaSO_4$.

- « **Béton** » concerne un mortier dans lequel la taille des granulats est supérieure à 4 mm.

- « **Catalyseur** » concerne tout produit participant à une réaction chimique pour en augmenter la vitesse, mais qui est régénéré ou éliminé au cours ou à la fin de la réaction. Selon un mode de réalisation, on entend par « catalyseur » tout produit chimique apte à accélérer la vitesse de réaction entre la source d'aluminosilicate (telle qu'un métakaolin par exemple) et la source d'hydroxyde de calcium (telle que de la chaux éteinte par exemple) ; de préférence pour obtenir de l'aluminate de calcium.

- « **Catalyseur alcalin** » : concerne un catalyseur comprenant au moins un élément alcalin (i.e. au moins un métal du groupe des métaux alcalins, de préférence lithium (Li), sodium (Na), potassium (K), rubidium (Rb), césium (Cs) ou francium (Fr)).

- « **Catéchol** » ou « **Pyrocatéchol** » ou « **Benzene-1,2-diol** » : concerne un composé organique de formule brute $C_6H_4(OH)_2$.

- « **Cendres de boues** » : concerne les cendres issues de la combustion des boues obtenues lors de la fabrication de la pâte à papier.

- « **Chaux** » ou « **Chaux aérienne** » ou « **Chaux éteinte** » : concerne un composé chimique minéral d'hydroxyde de calcium, de formule brute $Ca(OH)_2$. Ces termes désignent la chaux obtenue par hydratation de la chaux vive. Selon un mode de réalisation, ces termes désignent également les composés ayant pour principal composant de l'hydroxyde de calcium, et comprenant comme composés minoritaires des impuretés solides.

- « **Chaux naturelle hydratilique** » : concerne une chaux dont la prise se fait d'abord à l'eau puis à l'air formée à partir d'un gisement de calcaire contenant un peu d'argile.

- « **Chaux vive** » : désigne la chaux anhydre obtenue à la sortir du four à chaux après pyrolyse à 900°C. La chaux vive a pour composé majoritaire l'oxyde de calcium (CaO).

- « **Chaux à effet retardé** » : concerne une chaux vive obtenue à partir d'un procédé de cuisson spéciale qui ralentit la réhydratation lors d'un contact avec l'eau.

- « **Ciment** » : concerne un liant hydraulique (i.e. une poudre minérale) qui au contact de l'eau ou d'une solution saline, fait prise et durcit.

- « **Ciment à maçonner** » : concerne un ciment dont les performances ont été modifiées afin de le rendre directement utilisable en maçonnerie.

- « **Complexant** » : concerne tout produit apte à complexer un ion ; de préférence un cation _ ; plus préférentiellement un cation d'un métal alcalino-terreux. Selon un mode de réalisation, le complexant est un composé capable de complexer l'élément calcium (Ca), aluminium (Al), et silicium (Si).

- « **Désulfogypse** » : désigne un gypse obtenu lors de la désulfuration des gaz de combustion de charbon et de fuel, en particulier dans le cas de centrales thermiques ou de centrales nucléaires. Selon un mode de réalisation, le désulfogyspe est un sous-produit de fabrication (déchet de centrales thermiques).

- « **Ettringite** » : désigne une espèce minérale composée de sulfate de calcium et d'aluminium hydratée, de formule $Ca_6Al_2(SO_4)_3(OH)_{12}\,26H_2O$.

- « **Ethanolamines** » : concerne un composé organique de formule $HO-(CH_2)_2-NH_2$ (monoéthanolamine), de formule $HO-(CH_2)_2-NH-(CH_2)_2-OH$ (diéthanolamine), ou de formule $N[(CH_2)_2-OH]_2$ (triéthanolamine).

- « **Fluogypse** » : désigne un gypse obtenu lors de la fabrication de l'acide fluorhydrique. Selon un mode de réalisation, le fluogyspe est un sous-produit de fabrication de l'acide fluorhydrique (déchet).

- « **Gypse** » : concerne un composé de sulfate de calcium dihydratée, de formule $CaSO_4\,2H_2O$.

- « **IPZ** » ou « **Indice pouzzolanique** » ou « **Indice d'activité pouzzonalique** »: représente la fraction active d'un aluminosilicate tel qu'un métakaolin, c'est-à-dire la quantité en hydroxyde de calcium, $Ca(OH)_2$, pouvant être fixée dans un gramme d'aluminosilicate. Cet indice (exprimé en mg/g) peut être déterminé par les méthodes connues de l'homme du métier telles que par exemple l'essai Chapelle (M. CYR et G. ESCADEILLAS, http://dspace.univtlemcen.dz/bitstream/112/624/1/Normalisation-du-metakaolin-pourquoicomment.pdf).

- « **Laitier** » : désigne les scories formées lors de la fusion ou l'élaboration d'un métal par voie liquide. Le laitier est composé d'un mélange de silicates, d'aluminates, et de chaux et optionnellement des oxydes métalliques à l'exception des oxydes de fer.

- **Laitier de hauts fourneaux** » : concerne tout sous-produit de l'industrie sidérurgique formé lors de la préparation de la fonte à partir de minerai de fer.

- « **Laitier d'aluminates amorphes** » : concerne un laitier de sidérurgie à haute teneur en aluminium dont le processus de refroidissement a rendu la structure amorphe.

- « **Liant hydraulique** » : concerne tout mélange poudreux ayant la propriété lors de son hydratation de se solidifier puis de durcir en acquérant des caractéristiques mécaniques telles que la résistance à la compression, la résistance en traction, ou l'adhérence.

- « **Liant ettriiigitique** » : concerne un liant hydraulique dont les constituants lors de leur hydratation se transforment et fournissent comme hydrate principal, l'ettringite de formule $3CaO.Al_2O$ .$3CaSO_4.32H_2O$.

- « **Métakaolin** » : concerne une poudre issue de la calcination et du broyage d'une argile. Selon un mode de réalisation, le métakaloin est une poudre issue de la calcination et du broyage d'une argile composée majoritairement de kaolinite. Selon un mode de réalisation, le métakaolin est une poudre constituée principalement de particules de silicate d'alumine amorphes composées essentiellement d'oxyde de silicium ($SiO_2$) et d'oxyde d'aluminium ($Al_2O_3$) réactifs.

- « **Mortier** » : concerne une formulation comprenant ou constituée d'un liant, de sable, d'eau, et optionnellement d'additifs.

- « **Phosphogypse** » : désigne le gypse formé lors de la fabrication de l'acide phosphorique à partir de phosphate naturel. Selon un mode de réalisation, le phosphogyspe est un sous-produit de fabrication de l'acide phosphorique (déchet).

- « **Pouzzolane** » : concerne une matière silico-alumineuse, naturelle ou artificielle, apte à température ordinaire et en présence d'eau, de se combiner à la chaux.

- « **RMK** » est défini par l'équation suivante :

$$RMK = \frac{[Qm(C\$) \times 592000]}{IPZ \times Q(MK) \times 3}$$

dans laquelle :

IPZ représente l'indice pouzzolanique de la source d'aluminosilicate ;
Q(MK) représente la quantité massique, de préférence en gramme, d'aluminosilicates présents dans le liant ettringitique ; et
Qm(C$) représente la quantité molaire de sulfate de calcium présent dans le liant ettringitique.

- « **Saccharose** » : désigne un composé chimique d'une molécule de glucose et d'une molécule de fructose unies par leurs groupements réducteurs et de formule $C_{12}H_{22}O_{11}$.

- « **Sat(CH)** » représente le taux de saturation massique en hydroxyde de calcium, $Ca(OH)_2$ dans une composition donnée. Elle est déterminée selon l'équation (e1) suivante :

$$Sat(CH) = \frac{Q(CH)}{QST(CH)} \qquad (e1)$$

où :

Q(CH) représente la quantité en grammes, d'hydroxyde de calcium ($Ca(OH)_2$) dans le mélange de l'invention ; et
QST(CH) représente la quantité en grammes, d'hydroxyde de calcium stoechiométriquement nécessaire à la réaction de formation de l'ettringite. Le paramètre QST(CH) peut être déterminé selon l'équation (e2) suivante :

$$QST(CH) = \frac{[IPZ \times Q(MK) \times 0.000625]}{P(CH)} \qquad (e2)$$

où :

IPZ représente l'indice pouzzolanique tel que défini précédemment ;

7

Q(MK) représente la quantité en grammes, de métakaolin ou d'aluminosilicates présent dans le mélange ; et P(CH) représente la pureté de la source d'hydroxyde de calcium telle que par exemple la chaux, en hydroxyde de calcium.

- « **Sulfate de calcium** » : concerne un composé chimique minéral anhydre, de formule $CaSO_4$.

- « **Titanogypse** » : désigne le gypse formé lors de la fabrication du titane. Selon un mode de réalisation, le titanogyspe est un sous-produit lors de la fabrication du titane (déchet).

- « **Gypse de démolition** » : désigne le gypse obtenu par broyage des Placoplatres ou de toutes formes de gyspe de construction.

## DESCRIPTION DÉTAILLÉE

### Procédé

L'invention concerne donc un procédé de préparation d'un liant ettringitique. Selon un mode de réalisation, le procédé de l'invention concerne la préparation d'un liant hydraulique pour la formation d'ettringite comme hydrate principal, de préférence d'ettringite primaire.

En particulier, l'invention concerne un procédé de préparation d'un liant ettringitique comprenant une étape de mélange d'au moins :

- une source d'aluminosilicate ; caractérisée par un indice d'activité pouzzolanique (IPZ) déterminé par la méthode de l'essai Chapelle, compris dans une gamme de 200 à 2200 mg/g ;
- une source de sulfate de calcium ; et
- une source d'hydroxyde de calcium (ou de chaux) ;

- au moins un catalyseur alcalin choisi parmi le fluorure de sodium, l'aluminate de sodium, le phosphate trisodique, l'ortho-silicate de sodium, le métasilicate de sodium, l'hexafluorosilicate de sodium, le fluorophosphate de sodium, l'hexamétaphosphate de sodium, le carbonate de sodium, le borate de sodium, l'hexafluoroaluminate de sodium, le tétrafluoroaluminate de potassium ou leurs mélanges ; et
- au moins un activateur choisi parmi des composés aptes à complexer des cations, de préférence des composés aptes à complexer le calcium, l'aluminium et/ou le silicium, ledit mélange présentant :

    - un taux de saturation en hydroxyde de calcium, noté Sat(CH), compris dans une gamme de 0,75 à 8 ; et
    - un taux de sulfate de calcium, noté RMK, compris dans une gamme de 0,05 à 1,25 ; les paramètres RMK et Sat(CH) étant définis selon la revendication 1.

Selon un mode de réalisation, la source d'aluminosilicate comprend ou est constitué d'un aluminosilicate. Selon un mode de réalisation, la source d'aluminosilicate comprend ou est constitué d'un métakaolin, d'une argile calcinée ou d'une fine issue de la production de chamotte. Selon un mode de réalisation, le procédé de préparation d'un liant ettringitique ne comprend pas l'utilisation de ciment Portland. Selon un mode de réalisation, la source d'aluminosilicate est une pouzzolane, une fine issue de la production de chamotte ou des cendres de boues de papeterie, de préférence un métakaolin.

Selon un mode de réalisation, le métakaolin est un produit commercial, de préférence le métakaolin est le métakaolin Argicem®, le métakaolin Argical M1000®, Argical M1200S®, le Metastar® M501, le Soka Metasial® ou leurs équivalents. Selon un mode de réalisation, la source d'aluminosilicate est une fine issue de l'industrie de la chamotte. Selon un mode de réalisation, le sulfate de calcium est choisi parmi l'anhydrite, le gypse naturel ou le gypse obtenu comme sous-produit de réactions industrielles tel que le désulfogypse, le titanogypse, le fluogypse, ou le phosphogypse. Selon un mode de réalisation, la source de sulfate de calcium comprend ou est constitué de gypse, d'anhydrite et/ou de plâtre. Selon un mode de réalisation, la source de sulfate de calcium est du plâtre alpha et/ou bêta. Selon un mode de réalisation, la source de sulfate de calcium comprend ou est constitué d'anhydrite, de préférence d'anhydrite naturelle.

Selon un mode de réalisation, la source d'hydroxyde de calcium est de la chaux éteinte. Selon un mode de réalisation, la source d'hydroxyde de calcium est de la chaux aérienne. Selon un mode de réalisation, la source d'hydroxyde de calcium est de la chaux hydraulique. Selon un mode de réalisation, la source d'hydroxyde de calcium est de la chaux aérienne. Selon un mode de réalisation, la source d'hydroxyde de calcium est obtenue à partir de la chaux vive.

Selon un mode de réalisation, la source d'hydroxyde de calcium est choisie parmi les chaux commerciales comme par exemple, chaux LHOIST® CL80, chaux LHOIST® CL90, chaux LHOIST Sorbacal® ou chaux aérienne éteinte Decorchaux® CL90.

Selon un mode de réalisation, le liant de l'invention peut en outre comprendre au moins un additif secondaire tel qu'une charge, de préférence une charge calcaire.

Selon un mode de réalisation, l'additif secondaire est une charge minérale, de préférence choisie parmi les charges calcaires, les charges siliceuses ou les laitiers granulés.

L'invention concerne un procédé de préparation d'un liant ettringitique comprenant une étape de mélange d'au moins :

- une source d'aluminosilicate ;
- une source de sulfate de calcium ;
- une source d'hydroxyde de calcium (ou de chaux) ;
- et un mélange accélérateur de prise comprenant un catalyseur et un activateur.

L'ajout d'au moins un catalyseur et d'au moins un activateur dans le liant permet d'accélérer la prise du liant lors de son hydratation pour l'obtention d'un matériau de construction.

Selon un mode de réalisation, l'invention concerne un procédé de préparation d'un liant ettringitique comprenant une étape de mélange d'au moins :

- une source d'aluminosilicate ;
- une source de sulfate de calcium ;
- une source d'hydroxyde de calcium (ou de chaux) ;
- du saccharose ;
- de l'acide tartrique ; et
- un aluminate alcalin, de préférence l'aluminate de sodium.

Selon un mode de réalisation, le liant de l'invention ne comprend pas d'acide oxalique, de triéthanolamine et/ou de l'aluminate de potassium. Selon un mode de réalisation, le liant de l'invention ne comprend pas d'acide tartrique et/ou de saccharose. Selon un mode de réalisation, le liant de l'invention ne comprend pas d'acide mucique, d'acide malique d'acide tartrique, d'acide citrique, de saccharose et/ou d'acide hydroxypolycarboxylique.

Selon un mode de réalisation, le mélange comprend :

- un métakaolin flashé ARGICEM® d'IPZ compris entre 700 et 800 mg/g ;
- une chaux éteinte de type CL90 de teneur en chaux LEDUC d'environ 90% ; et
- de gypse.

Selon un mode de réalisation, le liant de l'invention comprend :

- un métakaolin Argical M1000® ;
- un sulfate de calcium de carrière ;
- de la chaux CL90 ;
- un catalyseur ; et
- un activateur.

Selon un mode de réalisation, le liant comprend de plus de 0% à 20%, de préférence de plus de 0% à 15%, plus préférentiellement de 1% à 10%, en masse de catalyseurs par rapport à la masse totale du liant. Selon un mode de réalisation, le liant comprend de 1% à 20%, de préférence de 2% à 20%, de 3% à 20%, de 4% à 20%, de 5% à 20%, de 6% à 20%, de 7% à 20%, de 8% à 20%, de 9% à 20%, de 10% à 20%, de 11% à 20%, de 12% à 20%, de 13% à 20%, de 14% à 20%, de 15% à 20%, de 16% à 20%, de 17% à 20%, de 18% à 20%), de 19% à 20%, en masse de catalyseurs par rapport à la masse totale du liant. Selon un mode de réalisation, le liant comprend 1, 2, 3, 4, 5, 6, 7, 8, 9, 10, 11, 12, 13, 14, 15, 16, 17, 18, 19 ou 20 % en masse de catalyseurs par rapport à la masse totale du liant.

Selon un mode de réalisation, le liant comprend de 1% à 10%, d'activateurs en masse par rapport à la masse totale du liant. Selon un mode de réalisation, le liant comprend de 1% à 20%, de préférence de 2% à 20%, de 3% à 20%, de 4% à 20%, de 5% à 20%, de 6% à 20%, de 7% à 20%, de 8% à 20%, de 9% à 20%, de 1_0% à 20%, de 11% à 20%, de 12% à 20%, de 13% à 20%, de 14% à 20%, de 15% à 20%, de 16%, à 20%, de 17% à 20%, de 18% à 20%, de 19%) à 20%, d'activateurs en masse par rapport à la masse totale du liant. Selon un mode de réalisation, le liant comprend 1, 2, 3, 4, 5, 6, 7, 8, 9, 10, 11, 12, 13, 14, 15, 16, 17, 18, 19 ou 20 % d'activateurs en masse par rapport à la masse totale du liant.

Selon un mode de réalisation, le liant comprend de plus de 0% à 2%, de préférence de plus de 0% ; 0,1 ; 0,2 ; 0,3 ;

0,4 ; 0,5 ; 0,6 ; 0,7 ; 0,8 ; 0,9 ; 1 ; 1,1 ; 1,2 ; 1,3 ; 1,4 ; 1,5 ; 1,6 ; 1,7 ; 1,8 ; 1,9 ou 2%, d'activateurs et/ou de catalyseurs en masse par rapport à la masse totale du liant.

Selon un mode de réalisation, le mélange comprend de 1% à 30%, de préférence de 5% à 20%, d'additifs secondaires en masse par rapport à la masse totale du mélange ou du liant. Selon un mode de réalisation, le mélange comprend de 1% à 30%, de préférence de 2% à 30%, 3% à 30%, 4% à 30%, 5% à 30%, 6% à 30%, 7% à 30%, 8% à 30%, 9% à 30%, 10% à 30%, 12% à 30%, 13% à 30%, 14% à 30%, 15% à 30%, 16% à 30%, 17% à 30%, 18% à 30%, 19% à 30%, 20% à 30%, 21% à 30%, 22% à 30%, 23% à 30%, 24% à 30%, 25% à 30%, 26% à 30%, 27% à 30%, 28% à 30%, ou 29% à 30% d'additifs secondaires en masse par rapport à la masse totale du mélange ou du liant. Selon un mode de réalisation, le mélange comprend 1, 2, 3, 4, 5, 6, 7, 8, 9, 10, 11, 12, 13, 14, 15, 16, 17, 18, 19, 20, 21, 22, 23, 24, 25, 26, 27, 28, 29 ou 30 % d'additifs en masse par rapport à la masse totale du mélange ou du liant.

Selon un mode de réalisation, l'ajout d'additif secondaire permet un accroissement de 1 % à 100%, de préférence de 5% à 60% des performances mécaniques, en particulier de la résistance à la compression, du matériau obtenu à partir du liant ettringitique de l'invention, par rapport au même mélange de l'invention sans additif secondaire.

Avantageusement, l'ajout d'additif secondaire dans le mélange de l'invention conduit à une synergie des performances mécaniques du matériau obtenu à partir du liant ettringitique de l'invention. Avantageusement, l'ajout d'additif secondaire dans le mélange de l'invention permet de diminuer la demande en eau et de modifier le retrait dimensionnel lors de l'utilisation du liant ettringitique de l'invention.

Selon un mode de réalisation, le mélange de l'invention comprend en outre un adjuvant, de préférence choisi parmi les réducteurs d'eau et/ou super-plastifiants, les agents hydrofuge, les agents anti-moussant, les entraineurs d'air, et/ou les fibres.

Selon un mode de réalisation, le réducteur d'eau et/ou le superplastifiant est un polymère ; de préférence choisi parmi les poly(méth)acryliques, les polycarboxylates, et/ou les polyoléfines tels que les polyéthylènes (PE), ou leurs copolymères ; plus préférentiellement le réducteur d'eau est choisi parmi les produits commercialisés par la société SIKA: Tempo 9®, Tempo 12®, Viscocrete 125®, Viscocrete 150®, Viscocrete 225®, Viscocrete 430®, Viscocrete 111®, Viscocrete 510® ou Viscocrete 250®.

Selon un mode de réalisation, le réducteur d'eau n'est pas un lignosulfonate.

Selon un mode de réalisation, l'agent hydrofuge est choisi parmi les silicones et/ou les sels d'acides carboxyliques ; de préférence les silicones et/ou les stéarates. Selon un mode de réalisation, l'agent hydrofuge est choisi parmi les produits commerciaux SiKA Hydrofuge HW®, SIKA WT-115®, Dow Corning SHP 50®, Dow Corning SHP 60+®, et Dow Corning IE 6692®. Selon un mode de réalisation, l'agent hydrofuge est choisi parmi le stéarate de magnésium, le stéarate de calcium et le stéarate d'aluminium.

Selon un mode de réalisation, l'agent anti-moussant est un siloxane, de préférence un poly(siloxane), plus préférentiellement le polydiméthylsiloxane (PDMS).

Selon un mode de réalisation, l'entraîneur d'air est choisi parmi les produits commerciaux SIKA AER®, de préférence SIKA AER 5® et SIKA AER 200®. On entend par « entraineur d'air » dans la présente invention, tout composé ou formulation chimique permettant d'apporter de fines bulles d'air dans un mélange. Selon un mode de réalisation, l'entraineur d'air fournit des bulles d'air d'un diamètre moyen compris de 10 à 500 μm. Selon un mode de réalisation, les fibres sont choisies parmi les fibres métalliques, les fibres polymères telles que les fibres de polyéthylène, les fibres végétales et/ou les fibres de verre.

Selon un mode de réalisation, les agents de cure sont choisis parmi les produits commerciaux Pieri Cure & Fix®, et Antisol®. Dans la présente invention, on entend par « produit de cure », tout composé apte à limiter l'évaporation de l'eau pendant le durcissement du béton ou du mortier à partir de liant ettringitique de l'invention.

Selon un mode de réalisation, l'huile de décoffrage est choisie parmi les huiles naturelles ou synthétiques, végétales ou minérales ; de préférence les huiles végétales ; plus préférentiellement l'huile Decoffre Emulsion Végétale E® commercialisée par la société SIKA ou l'huile Decoffrage Végétale® commercialisée par la société Deltapro.

Selon un mode de réalisation, le liant ettringitique est anhydre. Selon un mode de réalisation, le liant ettringitique ne comprend pas une quantité d'eau suffisante pour hydrater les composés du mélange et/ou pour provoquer le durcissement du liant ettringitique. Selon un mode de réalisation, le liant ettringitique comprend en outre de l'eau.

Le liant ettringitique ou le mélange est caractérisé par :

- un taux de saturation en hydroxyde de calcium, noté Sat(CH), compris dans une gamme de 0,75 à 8 ; et
- un taux de sulfate de calcium, noté RMK, compris dans une gamme de 0,05 à 1,25 ; le paramètre RMK étant définie par l'équation suivante :

$$RMK = \frac{[Qm(C\$) \times 592000]}{IPZ \times Q(MK) \times 3}$$

dans laquelle :

> IPZ représente l'indice pouzzolanique de la source d'aluminosilicate ;
> Q(MK) représente la quantité en gramme d'aluminosilicates présents dans le liant ettringitique ; et
> Qm(C$) représente la quantité en moles, de sulfate de calcium présent dans le liant ettringitique.

L'indice pouzzolanique IPZ est compris dans une gamme de 200 à 2200 mg/g, de préférence de 400 à 2000 mg/g, plus préférentiellement de 600 à 1800 mg/g. Selon un mode de réalisation, l'indice pouzzolanique IPZ est compris dans une gamme de préférence de 550 à 2200 mg/g, de 600 à 2200 mg/g, de 700 à 2200 mg/g, de 800 à 2200 mg/g, de 900 à 2200 mg/g, de 1000 à 2200 mg/g, de 1100 à 2200 mg/g, de 1200 à 2200 mg/g, de 1300 à 2200 mg/g, de 1400 à 2200 mg/g, de 1500 à 2200 mg/g, de 200 à 1900 mg/g, de 200 à 1800 mg/g, de 200 à 1700 mg/g, de 200 à 1600 mg/g, de 200 à 1500 mg/g, de 200 à 1400 mg/g, de 200 à 1300 mg/g, de 200 à 1200 mg/g, de 200 à 1 100 mg/g, de 200 à 1000 mg/g, de 200 à 900 mg/g. Selon un mode de réalisation, l'indice pouzzolanique IPZ est compris de 600, 700, 800, 900, 1000, 1100, 1200, 1300 ou 1400 mg/g.

Le paramètre RMK tel que défini ci-dessus, est compris dans une gamme de 0,05 à 1,25 ; de préférence de 0,1 à 1 ; plus préférentiellement de 0,2 à 0,8. Selon un mode de réalisation, le paramètre RMK tel que défini ci-dessus, est compris de 0,1 à 1,25 ; de 0,2 à 1,25 ; de 0,3 à 1,25 ; de 0,4 à 1,25 ; de 0,5 à 1,25 ; de 0,6 à 1,25 ; de 0,7 à 1,25 ; de 0,8 à 1,25 ; de 0,9 à 1,25 ; de 1 à 1,25. Selon un mode de réalisation, le paramètre RMK tel que défini ci-dessus, est compris de 0,1 à 1,25 ; de 0,1 à 1,2 ; de 0,1 à 1,25 ; de 0,1 à 1,1 ; de 0,1 à 1 ; de 0,1 à 0,9 ; de 0,1 à 0,8 ; de 0,1 à 0,7 ; de 0,1 à 0,6 ; de 0,1 à 0,5 ; de 0,1 à 0,4 ; de 0,1 à 0,3 ; ou de 0,1 à 0,2. Selon un mode de réalisation, le paramètre RMK tel que défini ci-dessus, est compris dans une gamme de 0,20 à 0,80 ; de préférence de 0,25 à 0,80 ; 0,30 à 0,80 ; 0,35 à 0,80 ; 0,40 à 0,80 ; 0,45 à 0,80 ; 0,50 à 0,80 ; 0,55 à 0,80 ; 0,60 à 0,80 ; 0,65 à 0,80 ; ou 0,70 à 0,80. Selon un mode de réalisation, le paramètre RM K tel que défini ci-dessus, est compris dans une gamme de 0,20 à 0,80 ; de préférence de 0,20 à 0,75 ; de 0,20 à 0,70 ; de 0,20 à 0,65 ; de 0,20 à 0,60 ; de 0,20 à 0,55 ; de 0,20 à 0,50 ; de 0,20 à 0,45 ; de 0,20 à 0,40 ; de 0,20 à 0,35 ; de 0,20 à 0,30 ; ou de 0,20 à 0,25.

Le paramètre Sat(CH) tel que défini ci-dessus, est compris dans une gamme de 0,75 à 8 ; de préférence de 1 à 8 ; de 2 à 8 ; de 3 à 8 ; de 4 à 8 ; de 5 à 8 ; de 6 à 8 ; ou de 7 à 8. Selon un mode de réalisation, le paramètre Sat(CH) est égal à 1, 2, 3, 4, 5, 6, 7 ou 8. Selon un mode de réalisation, le paramètre Sat(CH) tel que défini ci-dessus, est compris dans une gamme de de 0,75 à 7 ; de 0,75 à 6 ; de 0,75 à 5 ; de 0,75 à 4 ; de 0,75 à 3 ; de 0,75 à 2 ; ou de 0,75 à 1. Dans la présente invention, le taux d'hydroxyde de calcium dans ces chaux peut être déterminé par toutes méthodes connues de l'Homme du métier telles que par exemple la méthode Leduc (Hornain, 1995).

### *Liant ettringitique*

L'invention concerne un liant ettringitique. En particulier, l'invention concerne un liant ettringitique susceptible d'être obtenu à partir du procédé de l'invention tel que décrit précédemment.

Selon un mode de réalisation, le liant ettringitique est obtenu à partir du mélange d'au moins :

- au moins une source d'aluminosilicate tel que décrit précédemment ;
- au moins une source de sulfate de calcium tel que décrit précédemment ;
- au moins source d'hydroxyde de calcium tel que décrit précédemment ; et
- au moins un catalyseur alcalin choisi parmi le fluorure de sodium, l'aluminate de sodium, le phosphate trisodique, l'ortho-silicate de sodium, le métasilicate de sodium, l'hexafluorosilicate de sodium, le fluorophosphate de sodium, l'hexamétaphosphate de sodium, le carbonate de sodium, le borate de sodium, l'hexafluoroaluminate de sodium, le tétrafluoroaluminate de potassium ou leurs mélanges ;
- au moins un activateur tel que décrit précédemment, de préférence choisi parmi des composés aptes à complexer des cations, de préférence des composés aptes à complexer le calcium, l'aluminium et/ou le silicium.

Le liant ettringitique a un paramètre RMK tel que défini ci-dessus, compris dans une gamme de 0,05 à 1,25 ; de préférence de 0,1 à 1 ; plus préférentiellement de 0,2 à 0,8. Selon un mode de réalisation, le paramètre RMK tel que défini ci-dessus, est compris de 0,1 à 1,25 ; de 0,2 à 1,25 ; de 0,3 à 1,25 ; de 0,4 à 1,25 ; de 0,5 à 1,25 ; de 0,6 à 1,25 ; de 0,7 à 1,25 ; de 0,8 à 1,25 ; de 0,9 à 1,25 ; de 1 à 1,25. Selon un mode de réalisation, le paramètre RMK tel que défini ci-dessus, est compris de 0,1 à 1,25 ; de 0,1 à 1,2 ; de 0,1 à 1,25 ; de 0,1 à 1,1 ; de 0,1 à 1 ; de 0,1 à 0,9 ; de 0,1 à 0,8; de 0,1 à 0,7 ; de 0,1 à 0,6 ; de 0,1 à 0,5 ; de 0,1 à 0,4 ; de 0,1 à 0,3 ; ou de 0,1 à 0,2. Selon un mode de réalisation, le paramètre RMK tel que défini ci-dessus, est compris dans une gamme de 0,20 à 0,80 ; de préférence de 0,25 à 0,80 ; 0,30 à 0,80 ; 0,35 à 0,80 ; 0,40 à 0,80 ; 0,45 à 0,80 ; 0,50 à 0,80 ; 0,55 à 0,80 ; 0,60 à 0,80 ; 0,65 à 0,80 ; ou 0,70 à 0,80. Selon un mode de réalisation, le paramètre RMK tel que défini ci-dessus, est compris dans une gamme de 0,20 à 0,80 ; de préférence de 0,20 à 0,75 ; de 0,20 à 0,70 ; de 0,20 à 0,65 ; de 0,20 à 0,60 ; de 0,20 à 0,55 ; de 0,20 à 0,50 ; de 0,20 à 0,45 ; de 0,20 à 0,40 ; de 0,20 à 0,35 ;

de 0,20 à 0,30 ; ou de 0,20 à 0,25.

Le liant ettringitique a un paramètre Sat(CH) tel que défini ci-dessus, compris dans une gamme de 0,75 à 8 ; de préférence de 1 à 8 ; de 2 à 8 ; de 3 à 8 ; de 4 à 8 ; de 5 à 8 ; de 6 à 8 ; ou de 7 à 8. Selon un mode de réalisation, le paramètre Sat(CH) est égal à 1, 2, 3, 4, 5, 6, 7 ou 8. Selon un mode de réalisation, le paramètre Sat(CH) tel que défini ci-dessus, est compris dans une gamme de 0,75 à 8 ; de 0,75 à 7 ; de 0,75 à 6; de 0,75 à 5 ; de 0,75 à 4 ; de 0,75 à 3 ; de 0,75 à 2 ; ou de 0,75 à 1.

### *Utilisations*

L'invention concerne également l'utilisation du liant ettringitique de l'invention pour la préparation de matériaux de construction.

Selon un mode de réalisation, le liant ettringitique de l'invention est utilisé pour la préparation de ciment, de ciment à maçonner, de liant routier, de béton, de mortier et/ou de chaux formulée.

### *Matériau de construction*

Un matériau est obtenu par hydratation du liant ettringitique de l'invention.

Lors de l'hydratation du liant ettringitique, deux réactions chimiques sont mises en œuvre permettant l'obtention d'ettringite :

(1) Réaction entre la chaux et l'aluminosilicate conduisant à la formation d'aluminate de calcium (C4AH13 en notation cimentaire)

$$AS2 + 4\ CH \rightarrow C4AH13 + 2S$$

(2) Réaction de l'aluminate de calcium formé en (1) avec le sulfate de calcium conduisant à la formation d'ettringite

$$C4AH13 + 3\ C\$ \rightarrow C6A\$3H32 + CH$$

L'équation-bilan de la réaction d'hydratation du liant ettringitique est :

$$AS2 + 5CH + 3\ C\$ \rightarrow C6A\$3H32 + 2CSH$$

Dans la présente invention, l'hydratation du liant ettringitique de l'invention conduit à un matériau dont la masse volumique dépend des applications visées. Selon un mode de réalisation, le matériau de l'invention a une masse volumique comprise de plus de 0 à 2,1 kg/L, de préférence de 1 à 2 kg/L, plus préférentiellement la masse volumique est d'environ 1,9 kg/L. Avantageusement, la masse volumique du matériau de l'invention est plus faible que celles de matériaux obtenus à partir de ciment de Portland.

Selon un mode de réalisation, le matériau est un ciment, un ciment à maçonner, un liant routier, un béton, un mortier et/ou une chaux formulée.

Selon un mode de réalisation, les performances mécaniques telles que la résistance à la compression, d'un matériau obtenu à partir du liant ettringitique de l'invention sont augmentées de 1% à 100%, de préférence de 5% à 80%, plus préférentiellement de 40% à 70% par rapport à des matériaux issus de compositions pouzzolaniques classiques tels que ceux obtenus à partir d'un mélange d'aluminosilicate et de chaux.

Selon un mode de réalisation, le matériau comprend en outre un adjuvant, de préférence choisi parmi les agents de cure, et/ou les huiles de décoffrage. On entend par « huile de décoffrage », une huile répandue sur les peaux de coffrage afin de faciliter le démoulage du béton ou du mortier durci dans ledit coffrage.

Selon un mode de réalisation, le matériau obtenu à partir du liant ettringitique de l'invention ne présente pas ou peu de retrait lors de sa mise en forme.

Selon un mode de réalisation, le matériau obtenu à partir du liant ettringitique de l'invention ne comprend pas de ciment Portland.

Selon un mode de réalisation, le matériau obtenu à partir du liant ettringitique de l'invention a une résistance à la compression à 3 jours compris dans une gamme de plus de 0 à 60 MPa, de préférence de 2 à 45 MPa, plus préférentiellement de 10 à 40 MPa. Selon un mode de réalisation, le matériau obtenu à partir du liant ettringitique de l'invention a une résistance à la compression à 3 jours compris dans une gamme de plus de 1 à 60 MPa, de préférence de 2 à 50 MPa, de préférence de 10 à 50 MPa, de préférence de 15 à 50 MPa, de préférence de 20 à 50 MPa, de préférence de 25 à 50 MPa, de préférence de 30 à 50 MPa, de préférence de 35 à 50 MPa, de préférence de 40 à 50 MPa, ou de préférence de 45 à 50 MPa. Selon un mode de réalisation, le matériau obtenu à partir du liant ettringitique de l'invention a une résistance à la compression à 3 jours d'environ 14 MPa, 21 MPa, 23 MPa. ou 26 MPa.

Selon un mode de réalisation, le matériau obtenu à partir du liant ettringitique de l'invention a une résistance à la compression à 7 jours compris dans une gamme de plus de 0 à 60 MPa, de préférence de 2 à 45 MPa, plus préférentiellement de 10 à 40 MPa. Selon un mode de réalisation, le matériau obtenu à partir du liant ettringitique de l'invention a une résistance à la compression à 7 jours compris dans une gamme de plus de 1 à 60 MPa, de préférence de 2 à 50 MPa, de préférence de 10 à 50 MPa, de préférence de 15 à 50 MPa, de préférence de 20 à 50 MPa, de préférence de 25 à 50 MPa, de préférence de 30 à 50 MPa, de préférence de 35 à 50 MPa, de préférence de 40 à 50 MPa, ou de préférence de 45 à 50 MPa. Selon un mode de réalisation, le matériau obtenu à partir du liant ettringitique de l'invention a une résistance à la compression à 7 jours d'environ 11 MPa, 17 MPa, 18 MPa, 21 MPa, 27 MPa, 30 MPa, 31 MPa, 32 MPa, 33 MPa, 35 MPa, 42 MPa ou 46 MPa.

Selon un mode de réalisation, le matériau obtenu à partir du liant ettringitique de l'invention a une résistance à la compression à 28 jours compris dans une gamme de plus de 0 à 150 MPa, de préférence de 2 à 100 MPa, plus préférentiellement de 20 à 90 MPa. Selon un mode de réalisation, le matériau obtenu à partir du liant ettringitique de l'invention a une résistance à la compression à 28 jours compris dans une gamme de plus de 2 à 150 MPa, de préférence 20 à 150 MPa, de préférence 30 à 150 MPa, de préférence 40 à 150 MPa, de préférence 50 à 150 MPa, de préférence 60 à 150 MPa, de préférence 70 à 150 MPa, de préférence 80 à 150 MPa, de préférence 90 à 150 MPa, de préférence 100 à 150 MPa, de préférence 110 à 150 MPa, de préférence 120 à 150 MPa, de préférence 130 à 150 MPa, de préférence 140 à 150 MPa. Selon un mode de réalisation, le matériau obtenu à partir du liant ettringitique de l'invention a une résistance à la compression à 28 jours compris dans une gamme de plus de 2 à 150 MPa, de préférence de 2 à 140 MPa, de préférence de 2 à 130 MPa, de préférence de 2 à 130 MPa, de préférence de 2 à 120 MPa, de préférence de 2 à 120 MPa, de préférence de 2 à 110 MPa, de préférence de 2 à 100 MPa, de préférence de 2 à 90 MPa, de préférence de 2 à 80 MPa, de préférence de 2 à 70 MPa, de préférence de 2 à 60 MPa, de préférence de 2 à 50 MPa, de préférence de 2 à 40 MPa, de préférence de 2 à 30 MPa, de préférence de 2 à 20 MPa, Selon un mode de réalisation, le matériau obtenu à partir du liant ettringitique de l'invention a une résistance à la compression à 28 jours d'environ 44 MPa, 52 MPa ou 54 MPa.

Selon un mode de réalisation, le matériau obtenu à partir du liant ettringitique de l'invention a une résistance en flexion à 28 jours compris dans une gamme de plus de 0 à 15 MPa, de préférence de 1 à 10 MPa, plus préférentiellement de 2 à 9 MPa. Selon un mode de réalisation, le matériau obtenu à partir du liant ettringitique de l'invention a une résistance en flexion à 28 jours compris dans une gamme de plus de 0 à 15 MPa, de préférence de 1 à 10 MPa, plus préférentiellement de 2 à 6 MPa. Selon un mode de réalisation, le matériau obtenu à partir du liant ettringitique de l'invention a une résistance en flexion à 28 jours compris dans une gamme de plus de 0 à 10 MPa, de préférence de 1, 2, 3, 4, 5, 6, 7, 8, 9 ou 10 MPa.

Dans la présente invention, les tests de résistance à la compression ont été conduits sur des compositions préalablement moulées (moules cubiques, 40 mm × 40 mm, ou 10 cm × 10 cm) avec l'appareil E0250/15 KN Controlab de classe A; ou avec des échantillons cylindriques (16 cm × 32 cm). Les mesures de résistance à la compression ont également été réalisées sur des murs avec l'appareil scléromètre Controlab.

*Procédé de préparation d'un matériau de construction*

Le procédé de préparation d'un matériau de construction comprend une étape de mélange du liant ettringitique tel que décrit précédemment, avec de l'eau.

Le procédé de préparation d'un matériau de construction comprend en outre une étape de mise en forme du matériau.

Le procédé de préparation d'un matériau de construction à partir du liant ettringitique de l'invention ne comprend pas l'utilisation de ciment Portland. Le procédé de préparation d'un matériau de construction à partir du liant ettringitique de l'invention ne comprend pas l'utilisation de sulfoaluminate de calcium.

## BRÈVE DESCRIPTION DES FIGURES

**Figure 1** est un graphique montrant le pourcentage de gain des performances mécaniques après 28 jours, pour un liant ettringitique de l'invention par rapport à celles d'une composition pouzzolanique classique, en fonction de la valeur du paramètre RMK.

**Figure 2** présente un graphique montrant le pourcentage de gain des performances mécaniques après 3 jours (ligne continue) ou après 7 jours (ligne pointillée), pour un liant ettringitique de l'invention par rapport à celles d'une composition pouzzolanique classique, en fonction de la valeur du paramètre RMK.

EXEMPLES

La présente invention se comprendra mieux à la lecture des exemples suivants qui illustrent non-limitativement l'invention.

*Abréviations*

A : en notation cimentière désigne l'oxyde d'aluminium ($Al_2O_3$) ou alumine ;
AS2 : en notation cimentière désigne un métakaolin ;
C : en notation cimentière désigne l'oxyde de calcium (CaO) ;
CH : en notation cimentière désigne l'hydroxyde de calcium ($Ca(OH)_2$) ;
CSH2 : en notation cimentière désigne le gypse ;
C4AH13 : en notation cimentière désigne l'aluminate tétracalcique ;
CxSH : en notation cimentière désigne un silicate de calcium où x varie de 1 à 3, de préférence de 1,2 à 2,5 ;
C2ASH8 : en notation cimentière désigne la gehlenite hydratée ;
C4A3$ : en notation cimentière désigne la yelem'nite ;
C2S : en notation cimentière désigne la belite ;
CS: en notation cimentière désigne le sulfate de calcium ;
C6A$3H32 : en notation cimentière désigne l'ettringite ;
C4A$H20 : en notation cimentière désigne l'alumino-monosulfate tricalcique ;
CL: chaux naturelle aérienne (« Calcic lime ») ;
DSF : désulfogypse ;
E/L : ratio massique de l'eau par rapport au liant ;
IPZ : indice pouzzolanique du métakaolin employé ;
L/T : ratio massique de liant par rapport au total des matières sèches (liant, additifs, etc.) ;
MK : métakaolin ;
MSLKL : métasilicate de sodium pentahydraté ;
NaHFS : hexafluorosilicate de sodium ;
NaHFA : hexafluoroaluminate de sodium ;
$NaAlO_2$ : aluminate de sodium ;
NaF : fluorure de sodium ;
P : gypse de carrière ;
P(C$) : pureté de la source de sulfate de calcium ;
R : gypse de démolition ;
RMK : la quantité de sulfate de calcium par rapport à la quantité de métakaolin, introduits dans le mélange initial et défini selon l'équation (e3) ;
S : en notation cimentière désigne le dioxyde de silicium ($SiO_2$) ou silice ;
$ : en notation cimentière désigne le trioxyde de soufre ($SO_{-3}$) ;
Sc : siccité dans le mélange ;
H : en notation cimentière désigne l'eau ($H_2O$) ;
Sat(CH) : la saturation massique en hydroxyde de calcium, $Ca(OH)_2$ dans une composition donnée ;
TEA : triéthanolamine.

*Matériel et Méthodes*

*Matériel*

Les aluminosilicates et métakaolins ont été founis par Argeco (produit Argicem®) ou par Imerys (produits Argical M1000®, Argical M1200S, MetaStar M501), par Soka (Soka Metasial®) ou sont des fines issues de l'industrie de la chamotte ou ont été fabriqués en laboratoire selon les protocoles classiques.
Diverses chaux ont été founies par LHOIST (chaux LHOIST® CL80, chaux LHOIST® CL90, chaux LHOIST Sorbacal®) ou par C.E.S.A. (chaux aérienne éteinte Decorchaux® CL90). Le taux d'hydroxyde de calcium dans ces chaux a été déterminé par la méthode Leduc (Hornain, 1995).
Diverses sources de sulfate de calcium tel que le gypse, ont été testées. Les produits ont été obtenus chez différents fournisseurs connus de l'Homme du métier.

*Caractéristiques du mélange de l'invention*

Le liant de l'invention est caractérisé par les paramètres tels que définis ci-dessous. L'indice pouzzolanique (IPZ) est un paramètre représentant la fraction active d'un métakaolin, c'est-à-dire la quantité en hydroxyde de calcium, $Ca(OH)_2$, pouvant être fixée dans un gramme de métakaolin. Cet indice peut être déterminé par les méthodes connues de l'homme du métier telles que par exemple l'essai Chapelle.

Le paramètre Sat(CH) représente le taux de saturation massique en hydroxyde de calcium, $Ca(OH)_2$ dans une composition donnée. Elle est déterminée selon l'équation (e1) suivante :

$$Sat(CH) = \frac{Q(CH)}{QST(CH)} \qquad (e1)$$

où :

Q(CH) représente la quantité en grammes, d'hydroxyde de calcium (Ca(OH)2) dans le liant ; et
QST(CH) représente la quantité en grammes, d'hydroxyde de calcium nécessaire à la réaction de formation de l'ettringite. Le paramètre QST(CH) peut être déterminé selon l'équation (e2) suivante :

$$QST(CH) = \frac{[IPZ \times Q(MK) \times 0.000625]}{P(CH)} \qquad (e2)$$

où :

IPZ représente l'indice pouzzolanique tel que défini précédemment ;
Q(MK) représente la quantité en grammes, de métakaolin ou d'aluminosilicates présent dans le liant ; et
P(CH) représente la pureté de la chaux en hydroxyde de calcium.

Le paramètre RMK représente le ratio stoechiométrique de sulfate de calcium par rapport à la quantité d'aluminosilicates tel que le métakaolin, introduits dans le mélange initial. Le paramètre QST(CH) peut être déterminé selon l'équation (e3) suivante :

$$RMK = \frac{[Qm(C\$) \times 592000]}{IPZ \times Q(MK) \times 3} \qquad (e3)$$

où :

IPZ représente l'indice pouzzolanique tel que défini précédemment ;
Q(MK) représente la quantité en grammes, de métakaolins ou d'aluminosilicates présent dans le liant ; et
Qm(C$) représente la quantité en moles, de sulfate de calcium _ présent dans le liant. Le paramètre Qm(C$) peut être déterminé selon l'équation (e4) suivante :

$$Qm(C\$) = \frac{[Q(G) \times P(C\$) \times Sc]}{M} \qquad (e4)$$

où :

Q(G) représente la quantité en grammes, de source de sulfate de calcium introduit dans le mélange initial ;
P(C$) représente la pureté massique de la source de sulfate de calcium ;
Sc représente la siccité, c'est-à-dire le pourcentage massique de matières sèches contenues dans le mélange.

*Résistance à la compression*

Les tests de résistance à la compression ont été conduits sur des compositions préalablement moulées (moules cubiques, 40 mm × 40 mm, ou 10 cm × 10 cm) avec l'appareil E0250/15 KN Controlab de classe A ; ou avec des échantillons cylindriques (16 cm × 32 cm).

Les mesures de résistance à la compression ont également été réalisées sur des murs avec l'appareil scléromètre Controlab.

## PARTIE A : COMPOSITIONS

Exemple 1 : Préparation d'un liant ettringitique selon le procédé de l'invention

*Protocole générale*

Les liants ettringitiques de l'invention ont été préparés à température ambiante, en mélangeant un aluminosilicate, un sulfate de calcium et de la chaux dans des proportions telles que le rapport RMK tel que défini précédemment soit compris dans une gamme de 0,05 à 1,25 ; et que le paramètre de saturation en chaux, Sat(CH), soit compris dans une gamme de 0,75 à 8.

Selon l'invention, à ce mélange (aluminosilicate/sulfate de calcium/chaux) sont ajoutés (i) des catalyseurs alcalins, (ii) des activateurs de réaction. Éventuellement des additifs secondaires, tels que des charges, de préférence des charges calcaires, peuvent être ajoutés.

*Exemples de mélanges de l'invention comprenant un aluminosilicate, un sulfate de* calcium *et de la chaux*

| Mélange N° | 1 | 2 | 3 | 4 | 5 | 6 | 7 | 8 | 9 | 10 | 11 |
|---|---|---|---|---|---|---|---|---|---|---|---|
| Aluminosilicate | Argical® M1000 | Argical® M1000 | Argical® M1000 | Fine de Chamotte | Fine de Chamotte | Produit synthétisé | Argicem® | Argical® M1200S | Metastar® M501 | Argical ®M1000 | Argical ®M1000 |
| IPZ | 1000 | 1000 | 1000 | 850 | 900 | 600 | 700-800 | 1400 | 950 | 1000 | 1000 |
| Sulfate de calcium | Titanogypse | Titanogypse | Désulfogypse | Titanogypse | Titanogypse | Désulfogypse | Gypse | Sulfate de calcium de carrière | Sulfate de calcium de carrière | Sulfate de calcium de carrière | Sulfate de calcium de carrière |
| Chaux | CL90 | CL90 | CL90 | CL90 | CL80 | CL90 | CL90 | CL90 | CL90 | CL90 | CL90 |
| RMK | 0,88 | 0,91 | 0,49 | 0,86 | 1,03 | 0,96 | 0-1 | 0,93 | 0,90 | 0,60 | 0,91 |
| Sat(CH) | 1,15 | 1,02 | 1,03 | 1,19 | 1,01 | 1,19 | 1-1,1 | 1,10 | 1,07 | 1,10 | 1,07 |

Tableau 1. Exemples de mélanges pour préparer un liant ettringitique selon l'invention.

*Exemples de catalyseurs*

Des catalyseurs ont également été ajoutés dans les mélanges **1** à **11** tels que décrits précédemment (Tableau 1).

Les catalyseurs employés ont été choisis parmi : le fluorure de sodium, l'hexafluoroaluminate de sodium, l'hexafluorosilicate de sodium, le fluorophosphate de sodium, le tétrafluoroaluminate de potassium, le métasilicate de sodium, l'orthosilicate de sodium, le trisilicate de sodium, le disilicate de sodium, l'aluminate de sodium, le phosphate de sodium, le carbonate de sodium, et le sulfate de sodium.

*Exemples d'activateurs*

Des activateurs ont également été ajoutés dans les mélanges **1** à **11** tels que décrits précédemment (Tableau 1). Les activateurs employés ont été choisis parmi les composés aptes à complexer les cations, en particulier le calcium tels que le saccharose, l'acide tartrique, l'acide citrique, l'acide gluconique, l'acide mandélique, l'acide lactique, ou une éthanolamine tel que la triéthanolamine (TEA).

Exemple 2. : Préparation d'un matériau à partir du liant ettringitique de l'invention

Divers matériaux ont pu être obtenus en mélangeant le liant ettringitique de l'invention avec une quantité d'eau, celle-ci étant modulée selon les applications visées.

Lors de l'hydratation du liant ettringitique, deux réactions chimiques sont mises en œuvre permettant l'obtention d'ettringite :

(1) Réaction entre la chaux et l'aluminosilicate conduisant à la formation d'aluminate de calcium (C4AH13 en notation cimentaire)

$$AS2 + 4\ CH \rightarrow C4AH13 + 2S$$

(2) Réaction de l'aluminate de calcium formé en (1) avec le sulfate de calcium conduisant à la formation d'ettringite

$$C4AH13 + 3\ C\$ \rightarrow C6A\$H32 + CH$$

L'équation-bilan de la réaction d'hydratation du liant ettringitique est :

$$AS2 + 5CH + 3\ C\$ \rightarrow C6A\$H32 + 2CSH$$

Les exemples suivants présentent les performances pour des matériaux obtenus à partir du liant ettringitique de l'invention.

Exemple 3 : Préparation d'un matériau à partir d'un liant ettringitique comprenant un mélange métakaolin/chaux/ gypse sans catalyse ni activation et performances de ce matériau (exemple de référence)

Le but de cette expérience est de montrer les performances d'un matériau issu de l'hydratation d'un liant ettringitique obtenu à partir d'un mélange de métakaolin, de chaux et de gypse dont le paramètre Sat(CH) est compris de 1 à 1,1 pour différentes valeurs du paramètre RMK tel que défini ci-dessus.

Pour cela, une comparaison a été menée entre un matériau issu du liant ettringitique obtenu par le mélange de :

- métakaolin flashé ARGICEM® d'IPZ compris entre 700 et 800 mg/g ;
- une chaux éteinte de type CL90 de teneur en chaux LEDUC d'environ 90% ; et
- de gypse ;

et d'un matériau issu d'une composition pouzzolanique classique (i.e. mélange de chaux et de métakaolins).

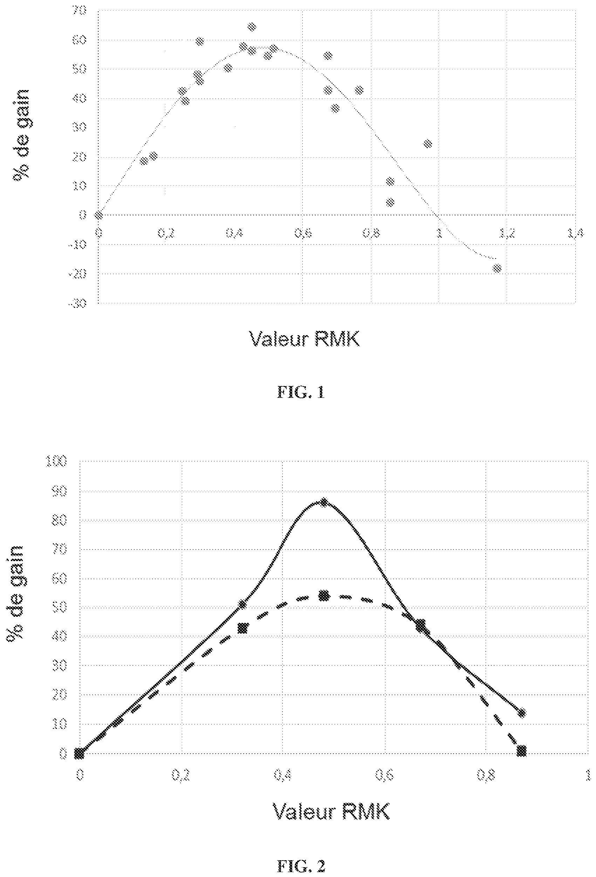

La **Figure 1** présente un graphique montrant le pourcentage de gain des performances mécaniques après 28 jours du mélange de l'invention par rapport à celles d'une composition pouzzolanique classique, en fonction de la valeur du paramètre RMK.

Les résultats montrent que :

- pour des valeurs RMK comprises entre 0 et 1, un gain de performances est toujours observé pour le matériau issu du liant ettringitique ; et
- pour des valeurs RMK comprises entre 0,25 et 0,75 un gain supérieur à 40% est obtenu comparativement aux performances d'une composition pouzzolanique classique.

En conclusion, ces résultats démontrent que le mélange ci-dessus permet d'augmenter significativement les performances mécaniques après 28 jours, du produit obtenu à partir du liant de l'invention. Par ailleurs, la Demanderesse a constaté dans des expériences complémentaires, qu'à partir d'une valeur de RMK de 0,6, un surcroit de gain pouvait être obtenu en fonction de la nature du gypse.

*Performances au jeune âge*

L'un des inconvénients majeurs d'un liant pouzzolanique classique (i.e. mélange de chaux et de métakaolin) obtenu à partir de ciment de Portland, est sa vitesse de prise (ou de durcissement) très lente ayant pour conséquences de faibles performances mécaniques au jeune âge.

Une étude a donc été menée pour évaluer les performances du liant ettringitique sur des temps plus courts, à savoir 3 jours (J+3) ou 7 jours (J+7) après la réalisation du mélange comprenant :

- métakaolin flashé ARGICEM® d'IPZ compris entre 700 et 800 mg/g ;
- une chaux éteinte de type CL90 de teneur en chaux LEDUC d'environ 90% ; et

- de gypse.

La **Figure 2** présente un graphique montrant le pourcentage de gain des performances mécaniques après 3 jours ou après 7 jours, pour un liant ettringitique obtenu à partir du mélange ci-dessus par rapport à celles d'une composition pouzzolanique classique, en fonction de la valeur du paramètre RMK.

Les résultats montrent que des résultats comparables à ceux obtenus après 28 jours. En effet, on observe également que :

- pour des valeurs RMK comprises entre 0,3 et 0,7 un gain supérieur à 40% est obtenu comparativement aux performances d'une composition pouzzolanique classique ; et
- pour des valeurs supérieures à 0,7, on observe une forte diminution du gain.

En conclusion, ces résultats démontrent que le mélange ci -dessus permet d'obtenir très rapidement un liant ettringitique ayant de bonnes performances mécaniques (résistance à la compression) même à des temps courts, temps pour lesquels des compositions pouzzolanes classiques ne permettent pas de fournir des résistances mécaniques acceptables pour leur utilisation comme matériaux de construction.

Exemple 4 : Préparation d'un matériau à partir d'un liant ettringitique comprenant un mélange métakaolin/chaux/ gypse en présence d'un catalyseur et d'un activateur - Comparaison des RMK

Le but de comparer les performances d'un matériau obtenu à partir d'un liant de l'invention, pour des valeurs de RMK supérieures à 0,6.

Pour cela, un matériau a été préparé par hydratation d'un liant ettringitique comprenant Argical M1000®/sulfate de calcium de carrière/chaux CL90 en présence de catalyseur et d'activateur. Le paramètre Sat(CH) est de 1,07-1,1. Le ratio eau/liant est d'environ 0,53. La résistance à la compression (RC) à 28 jours, a été mesurée pour deux valeurs de RMK :

| RMK | RC (MPa) |
|------|----------|
| 0,6 | 44 |
| 0,91 | 54 |

Ces résultats montrent qu'un surcroît de gain est obtenu pour des valeurs RMK supérieures à 0,6 lorsque le matériau est préparé à partir d'un liant ettringitique comprenant un catalyseur et un activateur.

Exemple 5 : Préparation d'un matériau à partir d'un liant ettringitique comprenant un mélange métakaolin/chaux /gypse en présence d'un catalyseur et performances de ce matériau

Le but de cette expérience est d'étudier les performances mécaniques d'un _ liant ettringitique obtenu à partir d'un mélange métakaolin/chaux/gypse avec ou sans catalyseur alcalin.

Le mélange métakaolin/chaux/gypse est caractérisé par une valeur de RMK égale à 0,67 et une valeur de Sat(CH) environ égale à 1,03.

Divers catalyseurs ont été testés : fluorure de sodium, aluminate de sodium, phosphate trisodique, ortho-silicate de sodium et métasilicate de sodium et hexafluorate de sodium.

La résistance à la compression (RC) a été mesurée 3 jours (J+3) ou 7 jours (J+7) après la préparation du mélange. Les résultats sont présentés dans le **Tableau 2** ci-dessous.

| Mélange | J+3 | | J+7 | |
|---|---|---|---|---|
| | RC* (MPa) | Gain (%) | RC* (MPa) | Gain (%) |
| Sans catalyseur | 13,6 | - | 26,7 | - |
| Fluorure de sodium | 20,9 | 54 | 32,3 | 21 |
| Aluminate de sodium | 20,5 | 51 | 29,9 | 12 |
| Phosphate trisodique | 25,8 | 90 | 29,5 | 11 |
| Ortho-silicate de sodium | 23,2 | 70 | 31,2 | 17 |
| Méta-silicate de sodium | 23,9 | 75 | 33,4 | 25 |
| Hexafluoro-silicate de sodium | 23,9 | 75 | 33,4 | 25 |

Tableau 2. Résistance à la compression et pourcentage de gain pour des mélanges métakaolin/gypse/chaux en présence de catalyseur. *RC : résistance à la compression.

Une étude a également été menée en variant la nature du gypse et les valeurs du paramètre RMK. Les résultats obtenus après 7 jours (J+7) et 28 jours (J+28) sont présentés dans le **Tableau 3** ci-dessous.

| Mélange avec le catalyseur : | Quantité de catalyseur dans le mélange (en kg/tonne de liant) | Gypse | RMK | J+7 Gain (%) | J+28 Gain (%) |
|---|---|---|---|---|---|
| Fluorure de sodium | 10 | desulfogypse | 0,76 | 31 | 18 |
| | 10 | desulfogypse | 0,45 | 17 | 11 |
| | 10 | desulfogypse | 0,3 | 11 | 5 |
| Hexafluoro-aluminate de sodium | 20 | desulfogypse | 0,3 | 35 | 13 |
| Fluorophosphate | 20 | desulfogypse | 0,3 | 30 | 13 |
| Aluminate de sodium | 3,3 | desulfogypse | 0,77 | 30 | 20 |
| | 6,7 | desulfogypse | 0,77 | 42 | 20 |
| | 13,3 | desulfogypse | 0,77 | 46 | 19 |
| Hexamétaphosphate de sodium | 4,1 | titanogypse | 0,66 | 18 | 4 |
| | 8,3 | titanogypse | 0,66 | 31 | 17 |
| Carbonate de sodium | 4,1 | titanogypse | 0,66 | 21 | 17 |
| Borate de sodium | 4,1 | titanogypse | 0,66 | 21 | 17 |

| Aluminate de sodium | 8,3 | titanogypse | 0,66 | 36 | 15 |
| | 13,1 | titanogypse | 0,66 | 50 | 29 |
| | 13,3 | Gypse de démolition | 0,66 | 34 | 14 |
| | 13,3 | Gypse de démolition | 0,43 | 31 | 34 |
| | 26,7 | Gypse de démolition | 0,61 | 57 | 41 |

**Tableau 3. Pourcentage de gain pour divers mélanges métakaolin/gypse/chaux en présence de catalyseur en fonction du paramètre RMK et de la source de gypse, comparativement au même mélange sans catalyseur. \*RC : résistance à la compression.**

Les résultats montrent que l'ajout d'un catalyseur alcalin dans le mélange permet d'augmenter la résistance à la compression à des temps courts (J+7) ou plus longs (J+28).

Exemple 6 : Préparation d'un matériau à partir d'un liant ettringitigue comprenant un mélange métakaolin/chaux/ gypse en présence d'un catalyseur et d'un activateur et performances de ce matériau

L'avancement de la réaction de formation de l'ettringite dépend de l'apport en aluminate de calcium formé par la réaction entre la source d'aluminosilicate et la source d'oxyde de calcium (chaux). Cependant, les performances mécaniques du matériau obtenu à partir du liant ettringitique de l'invention dépendent du rendement de réaction entre l'aluminate de calcium et la source de sulfate de calcium (tel que le gypse).

La Demanderesse a donc cherché à optimiser le mélange de l'invention afin de fournir de meilleurs rendements et des résistances à la compression plus élevées.

Divers composés ont été testés sur une base mortier. La formulation du mortier consiste à mélanger du sable, de l'eau et le liant ettringitique de l'invention comprenant un mélange de :

- métakaolin flashé ARGICEM® d'IPZ environ égale à 700 mg/g ;
- chaux éteinte de type CL90 de teneur en chaux LEDUC d'environ 90% ; et
- désulfogypse ; et
- $NaAlO_2$ (1.3%) comme catalyseur ;
  dans lequel
- le paramètre RMK est égal à 0,82 ;
- le paramètre Sat(CH) est égal à 1,03.

Le mortier comprend un ratio sable sur liant (LIT) égal à 0,33. Le ratio eau sur liant (E/L) est compris entre 0,47 à 0,55.

De manière surprenant, la Demanderesse a mise en évidence que des composés apte à complexer le calcium tels que le saccarose et/ou les acides alpha-hydroxylés permettent d'obtenir des résistances à la compression après 7 et 28 jours améliorés par rapport à la formulation de référence **M1** (Cf. **Tableau 4**).

| Réf. | M1 | M2 | M3 | M4 | M5 | M6 | M7 | M8 | M9 | M10 | M11 | M12 | M13 |
|---|---|---|---|---|---|---|---|---|---|---|---|---|---|
| Acide tartrique (kg/ tonne de liant) | - | 1,3 | 1,3 | 1,3 | 1,3 | - | - | - | - | 1,3 | 1,3 | - | - |
| Saccharose (kg/ tonne de liant) | - | 1,3 | - | 0,3 | 0,7 | 1,3 | 1,3 | - | - | 0,7 | 0 | 1,3 | 1,3 |
| Autres (kg/ tonne de liant) | - | | | | | | Acide citrique (1,3) | Acide gluconique (1,3) | Acide citrique (1,3) | TEA (1,3) | TEA (1,3) | Acide salicylique (1,3) | Acide mandelique (1,3) |
| E/L | 0,55 | 0,47 | 0,53 | 0,53 | 0,53 | 0,53 | 0,53 | 0,53 | 0,53 | 0,53 | 0,53 | 0,54 | 0,55 |
| RC J+7 (MPa) | 29,2 | 39,5 | 34,7 | 33,1 | 39,2 | 36,1 | 31,4 | 36,2 | 37,2 | 35,8 | 35,6 | 32,3 | 33,1 |
| % Gain | - | 35,3 | 18,8 | 13,4 | 34,2 | 23,6 | 7,5 | 24 | 27,4 | 22,6 | 21,9 | 10,6 | 13,4 |
| RC J+28 (MPa) | 34,5 | 52,6 | 43,6 | 46,4 | 47,8 | 43,1 | 45,8 | 42,4 | 46,8 | 48,8 | 45,6 | 38,7 | 38,7 |
| % Gain | - | 52,5 | 26,4 | 34,5 | 38,6 | 24,9 | 32,8 | 22,9 | 35,7 | 41,4 | 32,2 | 12,2 | 12,2 |

Tableau 4. Performances d'un liant ettringitique comprenant au moins activateur.

EP 3 707 111 B1

**PARTIE B : UTILISATIONS DU LIANT ETTRINGITIQUE POUR LA FABRICATION DE MATERIAUX DE CONSTRUCTION**

Exemple 7 : Préparation de ciment

La Demanderesse a préparé les ciments 3-5 à partir du liant ettringitique de l'invention.
Les ciments 1 et 2 sont comparatifs.
Le ratio eau sur liant (E/L) est de 0,5. Les formulations et résultats sont présentés dans le **Tableau 5** ci-dessous.
Les résistances en flexion et à la compression ont été menées à partir d'éprouvettes $4 \times 4 \times 16$ mm. Les résultats montrent que les performances de ces ciments respectent les valeurs de résistance à la compression exigées par la norme EN-196.

| | Composé (en kg pour 1 tonne de liant) | Ciment 1 | Ciment 2 | Ciment 3 | Ciment 4 | Ciment 5 |
|---|---|---|---|---|---|---|
| Formulation du liant | Metakaolin Argicem® | 575 | 550 | 492 | 452 | 452 |
| | Chaux CL90 | 290 | 280 | 246 | 226 | 226 |
| | Gypse sec | 95 | 162 | 246 | 226 | 226 |
| | Laitier HF | 0 | 0 | 0 | 65,8 | 65,8 |
| | Charges | 40 | 0 | 0 | 0 | 0 |
| | Catalyseur | 0 | NaF : 8 | $NaAlO_2$ : 13,4 | MSLK : 19,4 | NaHFS : 19,4 |
| | Saccharose | 0 | 0 | 1,3 | 1,1 | 1,1 |
| | Acide tartrique | 0 | 0 | 1,3 | 1,1 | 1,1 |
| Paramètres | RMK | 0,26 | 0,48 | 0,82 | 0,82 | 0,82 |
| | Sat(CH) | 1,04 | 1,05 | 1,03 | 1,03 | 1,03 |
| Performances à 28 jours (MPa) | Flexion | 4,9 | 6,7 | 6,9 | 7,9 | 7,9 |
| | Compression | 33,7 | 36,4 | 44,1 | 47,6 | 47,6 |

Tableau 5. Performances de ciments préparés à partir du liant ettringitique de l'invention.

Exemple 8 : Préparation de liant routier

La Demanderesse a préparé plusieurs liants routiers à partir du liant ettringitique de l'invention.
L'objectif est de fournir un liant routier apte à répondre aux objectifs de résistance mécanique fixés par la norme NF P15-108, à savoir obtenir une valeur de portance (module EV2) supérieure à 50MPa.
La détermination de la portance a été effectuée par l' « essai à la plaque ». Cette méthode consiste à appliquer une contrainte sur une surface de diamètre et de rigidité normalisés afin de mesurer son enfoncement dans le sol. Cette méthode permet de détermine le coefficient de réaction de Westergraad (Kw), les modules EV1 et EV2 de la portance ainsi que le rapport de compactage (EV2/EV1).
Le liant de l'invention étudié comprend un mélange de :

- 600 kg /tonne de liant, de métakaolin flashé ARGICEM® d'IPZ environ égale à 700 mg/g ;
- 300 kg /tonne de liant, de chaux éteinte de type CL90 de teneur en chaux LEDUC d'environ 90% ; et
- 100 kg /tonne de liant, de gypse ;
  dans lequel
- le paramètre RMK est égal à 0,27 ;
- le paramètre Sat(CH) est égal à 1,03.

Pour cela, un sol argilo-sableux d'une surface de 250 m$^2$ et de 40 cm de profondeur, a été stabilisé mécaniquement avec le liant de l'invention. Le dosage est compris entre 35 et 40 kg de liant routier par mètre carré. Après 28 jours, la portance EV2 a été mesurée sur ce sol stabilisé. Les résultats sont présentés dans le **Tableau 6.**

| Kw | EV1 (MPa) | EV2 (MPa) | Rapport de compactage EV2/EV1 |
|---|---|---|---|
| 55 | 40 | 74 | 1,8 |
| 58 | 39 | 79 | 2,0 |

Tableau 6. Caractéristiques de l'essai à la plaque obtenu à partir du liant de l'invention.

Les résultats montrent que les modules EV2 sont supérieurs à 50 MPa.

Par conséquent, ces résultats confirment que le liant de l'invention peut être employé comme liant routier tout en satisfaisant les exigences de la norme NF P15-108.

Exemple 9 : Préparation de mortier

La Demanderesse a préparé les mortiers MRT1,MRT2, MRT6 et MRT7 à partir du liant ettringitique de l'invention Les mortiers MRT3 et MRT4 sont comparatifs.

Le **Tableau 7** présente quelques exemples de mortiers préparés par la Demanderesse à partir du liant de l'invention. Dans ce tableau, les quantités sont exprimées en kg par tonne de liant.

Ces mortiers ont été employés comme mortiers d'enduits sur différents supports tels que du béton ou du plâtre, ou comme mortiers de montage sur des supports de type parpaing, brique creuse, bio'brick et pierre naturelle. Après 8 mois d'observation, aucune incompatibilité n'a été visuellement relevée.

| Formulation | MK | Type | Argicem® | Argicem® | Argicem® | Argicem® | M1000® | Argicem® | Argicem® |
|---|---|---|---|---|---|---|---|---|---|
| | | | MRT1 | MRT2 | MRT3 | MRT4 | MRT5 | MRT6 | MRT7 |
| | MK | Type | Argicem® | Argicem® | Argicem® | Argicem® | M1000® | Argicem® | Argicem® |
| | | Quantité | 150 | 150 | 105 | 160 | 140 | 130 | 130 |
| | Chaux | Type | CL90 | CL90 | CL90 | CL90 | CL90 | CL90 | CL80 |
| | | Quantité | 75 | 75 | 53 | 80 | 90 | 65 | 80 |
| | Gypse | Type | Gypse de carrière | Gypse de carrière | Gypse de carrière | désulfogypse | Gypse de carrière | désulfogypse | Gypse de démolition |
| | | Quantité | 75 | 75 | 18 | 45 | 55 | 65 | 90 |
| | Catalyseur | Type | $NaAlO_2$ | $NaAlO_2$ | - | NaF | NaF | NaF | $NaAlO_2$ |
| | | Quantité | 4 | 4 | - | 3 | 3 | 4 | 6 |
| | Accélérateur | Acide tartrique | 0,4 | 0,4 | 0 | 0 | 0 | 0,35 | 0,4 |
| | Accélérateur | Saccharose | 0,4 | 0,4 | 0 | 0 | 0 | 0,35 | 0,4 |
| | Laitier Haut fourneau | | 0 | 0 | 0 | 15 | 15 | 40 | 0 |
| Additifs | SP* | Type | V225 | V225 | V225 | V150 | V150 | V225 | V430 |

| | | | 35 | 30 | 25 | 20 | 15 | 10 | 5 |
|---|---|---|---|---|---|---|---|---|---|
| | | Quantité | 0,9 | 0,9 | 1 | 1 | 0,9 | 0,9 | 0,9 |
| | Granulats | Fillcarb® | 0 | 20 | 124 | 20 | 20 | 20 | 0 |
| | | Sable 0/1 | 0 | 100 | 0 | 100 | 100 | 100 | 0 |
| | | Sable 0/1 | 900 | 480 | 900 | 480 | 480 | 480 | 900 |
| | Eau | | 125 | 120 | 138 | 114 | 161 | 115 | 150 |
| Paramètres | RMK | | 0,82 | 0,82 | 0,28 | 0,46 | 0,45 | 0,82 | 0,91 |
| | Sat(CH) | | 1,03 | 1,03 | 1,03 | 1,03 | 0,93 | 1,03 | 1,12 |
| Performances | RC (MPa) | J+7 | 21,9 | 31,5 | 9,6 | 42,6 | 32,1 | 39,7 | 30,1 |
| | | J+28 | 44,6 | 51,5 | 16,8 | 45,9 | 38,7 | 50,3 | 43,6 |
| | Adhésion terre cuite (MPa) | | 0,58 | 1,32 | NA | NA | NA | NA | NA |

**Tableau 7. Formulations et caractéristiques de mortiers obtenus à partir d'un liant ettringitque de l'invention.** *superplastifiant*

Exemple 10 : Préparation de béton

La Demanderesse a préparé les bétons B1, B2 et B4 à partir du liant ettringitique de l'invention Le béton B3 est comparatif.

Le **Tableau 8** présente quelques exemples de bétons préparés par la Demanderesse à partir du liant de l'invention. Dans ce tableau, les quantités sont exprimées en _ kg par tonne de liant.

| | Composé | B1 | B2 | B3 | B4 |
|---|---|---|---|---|---|
| Formulation | Metakaolin Argicem® | 30 | 22 | 50 | 40 |
| | Chaux CL90 | 15 | 11 | 25 | 20 |
| | Gypse | 15 | 11 | 11 | 20 |
| | Aluminate de sodium | 0,80 | 0,60 | 0 | 1,07 |
| | Saccharose | 0,80 | 0,60 | 0 | 0,11 |
| | Acide tartrique | 0,80 | 0,60 | 0 | 0,11 |
| | Fill Carb® | 0 | 0 | 2 | 2 |
| | Sable 0/1 | 0 | 55 | 17 | 17 |
| | Sable 0/4 | 105 | 44 | 85 | 85 |
| | Sable 4/10 | 84 | 121 | 84 | 84 |
| | Eau | 28 | 21 | 40 | 35 |
| RC à 28 jours (MPa) | Cubes 10×10 | 25,8 | 35,1 | NA | NA |
| | Cylindres 16×32 | 20,7 | 27,9 | 25,8 | 40,1 |
| Classe de résistance (par scléromètre) (MPa) | | 20-30 | 40-50 | 25-35 | 40-50 |

**Tableau 8. Formulations de bétons obtenus à partir du liant de l'invention.**

Exemple 11 : Préparation de ciments à maçonner et chaux formulées

La Demanderesse a préparé plusieurs ciments à maçonner et chaux (exemple de référence).

Pour pouvoir être utilisé comme ciment à maçonner ou chaux formulée, la formulation doit présenter une résistance à la compression après 28 jours d'au moins 10 MPa pour les ciments à maçonner ; et d'au moins 3,5 MPa dans le cas des chaux formulées.

Le Tableau 9 présente quelques exemples de ciments à maçonner préparés par la Demanderesse.

Dans ce tableau, les quantités sont exprimées en kg par tonne de liant.

| Formulation | CM1 | CM2 | CM3 | CM4 | CM5 | CM6 |
|---|---|---|---|---|---|---|
| Metakaolin | Argicem® | Argicem® | Argicem® | Argicem® | Argicem® | Argicem® |
| Metakaolin (qtité) | 270 | 268 | 332 | 332 | 333 | 332 |
| Chaux CL90 | 135 | 134 | 332 | 400 | 333 | 266 |
| Gypse | 95 | 95 | 166 | 100 | 167 | 166 |
| Charge calcaire | 500 | 500 | 167 | 165 | 167 | 233 |
| Catalyseur (fluorure) | 0 | 3 | 3 | 3 | 0 | 3 |
| RMK | 0,58 | 0,58 | 0,82 | 0,49 | 0,57 | 0,57 |
| RC (J+3) | 5,7 | 7,2 | 10,2 | 9,8 | 11,6 | 11 |
| RC (J+7) | 9 | 14,6 | 15,8 | 13,9 | 23,4 | 23,9 |
| RC (J+28) | 15,2 | 20,5 | 22,3 | 16,8 | 34,3 | 32,6 |

Tableau 9. Formulations de ciments à maçonner et de chaux.

Les résultats montrent que dès trois jours, d'excellents résultats sont obtenus.

**Revendications**

1. Liant ettringitique comprenant :

- au moins une source d'aluminosilicate **caractérisée par** un indice d'activité pouzzolanique (IPZ) déterminé par la méthode de l'essai Chapelle, compris dans une gamme de 200 à 2200 mg/g ;
- au moins une source de sulfate de calcium ;
- au moins une source d'hydroxyde de calcium ;
- au moins un catalyseur alcalin choisi parmi le fluorure de sodium, l'aluminate de sodium, le phosphate trisodique, l'ortho-silicate de sodium, le métasilicate de sodium, l'hexafluorosilicate de sodium, le fluorophosphate de sodium, l'hexamétaphosphate de sodium, le carbonate de sodium, le borate de sodium, l'hexafluoroaluminate de sodium, le tétrafluoroaluminate de potassium ou leurs mélanges ; et
- au moins un activateur choisi parmi des composés aptes à complexer des cations, de préférence des composés aptes à complexer le calcium, l'aluminium et/ou le silicium ; ledit liant ettringitique étant **caractérisé par**

- un taux de saturation en hydroxyde de calcium, noté Sat(CH), compris dans une gamme de 0,75 à 8 ; et
- un taux de sulfate de calcium, noté RMK, compris dans une gamme de 0,05 à 1,25 ; le paramètre RMK étant définie par l'équation suivante

$$RMK = \frac{[Qm(C\$) \times 592000]}{IPZ \times Q(MK) \times 3}$$

dans laquelle :

IPZ représente l'indice pouzzolanique de la source d'aluminosilicate ; Q(MK) représente la quantité en gramme d'aluminosilicates présents dans le liant ettringitique ; et
Qm(C$) représente la quantité en moles, de sulfate de calcium présent dans le liant ettringitique.

2. Liant ettringitique selon la revendication **1,** dans lequel l'activateur est choisi parmi le saccharose, les acides alpha-hydroxylé ou leurs sels, les éthanolamines ou leurs sels, et/ou les catéchols ou ses dérivés.

3. Liant ettringitique selon la revendication **1** ou la revendication **2,** dans lequel la quantité de catalyseur est comprise dans une gamme de plus de 0% à 20% en masse par rapport à la quantité totale du liant.

4. Liant ettringitique selon l'une quelconque des revendications **1** à **3,** dans lequel la source d'aluminosilicate est une pouzzolane, une fine issue de la production de chamotte ou des cendres de boues de papeterie, de préférence un métakaolin.

5. Liant ettringitique selon l'une quelconque des revendications **1** à **4,** dans lequel la source d'hydroxyde de calcium est de la chaux éteinte, de la chaux hydraulique, de la chaux vive, de la chaux vive à effet retardé, de la chaux aérienne, de la chaux éteinte classique ou toute chaux commerciale.

6. Liant ettringitique selon l'une quelconque des revendications **1** à **5,** dans lequel la source de sulfate de calcium est choisi parmi l'anhydrite, le gypse naturel ou le gypse obtenu comme sous-produit de réactions industrielles tel que le désulfogypse, le titanogypse, le fluogypse, ou le phosphogypse.

7. Liant ettringitique selon l'une quelconque des revendications **1** à **6,** comprenant en outre des additifs, de préférence des laitiers, plus préférentiellement des laitiers de hauts fourneaux ou des laitiers d'aluminates amorphes.

8. Procédé de préparation d'un liant ettringitique selon l'une quelconque des revendications **1** à **7,** comprenant le mélange d'au moins :

- une source d'aluminosilicate **caractérisée par** un indice d'activité pouzzolanique (IPZ) déterminé par la méthode de l'essai Chapelle, compris dans une gamme de 200 à 2200 mg/g :
- une source de sulfate de calcium ;
- une source d'hydroxyde de calcium ;
- au moins un catalyseur alcalin choisi parmi le fluorure de sodium, l'aluminate de sodium, le phosphate trisodique, l'ortho-silicate de sodium, le métasilicate de sodium, l'hexafluorosilicate de sodium, le fluorophosphate de sodium, l'hexamétaphosphate de sodium, le carbonate de sodium, le borate de sodium, l'hexafluoroaluminate de sodium, le tétrafluoroaluminate de potassium ou leurs mélanges ; et
- au moins un activateur choisi parmi des composés aptes à complexer des cations, de préférence des composés aptes à complexer le calcium, l'aluminium et/ou le silicium,

ledit mélange présentant : - un taux de saturation en hydroxyde de calcium, noté Sat(CH), compris dans une gamme de 0,75 à 8 ; et

- un taux de sulfate de calcium, noté RMK, compris dans une gamme de 0,05 à 1,25 ; les paramètres RMK et Sat(CH) étant définis selon la revendication 1.

9. Procédé de préparation selon la revendication **8,** dans lequel la température à laquelle est effectué le mélange est comprise de plus de 0°C à 50°C, de préférence de 10°C à 40°C, plus préférentiellement à environ 25°C.

10. Utilisation du liant ettringitique selon l'une quelconque des revendications **1** à **7,** pour la préparation de ciments, de ciments à maçonner, de mortiers, de bétons, de liants routiers et/ou de chaux formulées.

**Patentansprüche**

1. Ettringit-Bindemittel, umfassend:

- mindestens eine Alumosilikat-Quelle, die durch einen Puzzolan-Aktivitätsindex (IPZ) gekennzeichnet ist, der durch das Chapelle-Testverfahren bestimmt wird, der in einem Bereich von 200 bis 2200 mg/g umfasst ist;
- mindestens eine Calciumsulfat-Quelle;
- mindestens eine Calciumhydroxid-Quelle;
- mindestens einen alkalischen Katalysator, ausgewählt aus Natriumfluorid, Natriumaluminat, Trinatriumphosphat, Natrium-Orthosilicat, Natrium-Metasilicat, Natrium-Hexafluorsilicat, Natrium-Fluorphosphat, Natrium-Hexametaphosphat, Natriumcarbonat, Natriumborat, Natrium-Hexafluoraluminat, Kalium-Tetrafluoraluminat oder deren Gemischen; und
- mindestens einen Aktivator, der aus Verbindungen ausgewählt wird, die imstande sind, Kationen zu komplexieren, vorzugsweise Verbindungen, die imstande sind, Calcium, Aluminium und/oder Silizium zu komplexieren; wobei das Ettringit-Bindemittel **gekennzeichnet ist durch**
-- einen Calciumhydroxid-Sättigungsgrad, Sat(CH) genannt, der in einem Bereich von 0,75 bis 8 umfasst ist; und
-- einen Calciumsulfat-Spiegel, RMK genannt, der in einem Bereich von 0,05 bis 1,25 umfasst ist; wobei der RMK-Parameter durch die folgende Gleichung definiert ist

$$RMK = \frac{[Qm(C\$) \times 592000]}{IPZ \times Q(MK) \times 3}$$

wobei:

IPZ den Pozzulan-Index der Alumosilikat-Quelle darstellt;
Q(MK) die Menge in Gramm an Alumosilikaten darstellt, die in dem Ettringit-Bindemittel vorhanden ist; und
Qm(C\$) die Menge in Mol an Calciumsulfat darstellt, die in dem Ettringit-Bindemittel vorhanden ist.

2. Ettringit-Bindemittel nach Anspruch 1, wobei der Aktivator aus Saccharose, Alpha-Hydroxysäuren oder deren Salzen, Ethanolaminen oder deren Salzen, und/oder Brenzkatechinen oder deren Derivaten ausgewählt ist.

3. Ettringit-Bindemittel nach Anspruch 1 oder Anspruch 2, wobei die Menge an Katalysator in einem Bereich von mehr als 0 Ma.-% bis 20 Ma.-% in Bezug auf die Gesamtmenge des Bindemittels umfasst ist.

4. Ettringit-Bindemittel nach einem der Ansprüche 1 bis 3, wobei die Alumosilikat-Quelle ein Puzzolan, ein feines Ergebnis aus der Produktion von Schamotte, oder Aschen aus Papierschlämmen, vorzugsweise ein Metakaolin ist.

5. Ettringit-Bindemittel nach einem der Ansprüche 1 bis 4, wobei die Calciumhydroxid-Quelle gelöschter Kalk, hydraulischer Kalk, Branntkalk, Branntkalk mit verzögerter Wirkung, Luftkalk, klassischer Löschkalk, oder jeder handelsübliche Kalk ist.

6. Ettringit-Bindemittel nach einem der Ansprüche 1 bis 5, wobei die Calciumsulfat-Quelle aus Anhydrit, Naturgips oder Gips ausgewählt ist, der als Nebenprodukt aus industriellen Reaktionen, wie Desulfogips, Titangips, Fluogips oder Phosphogips, erhalten wird.

7. Ettringit-Bindemittel nach einem der Ansprüche 1 bis 6, das weiter Zusatzstoffe, vorzugsweise Schlacken, bevorzugter Hochofenschlacken oder Schlacken amorpher Aluminate umfasst.

8. Verfahren zum Herstellen eines Ettringit-Bindemittels nach einem der Ansprüche 1 bis 7, umfassend das Gemisch aus mindestens:

- einer Alumosilikat-Quelle, die durch einen Puzzolan-Aktivitätsindex (IPZ) gekennzeichnet ist, der durch das Chapelle-Testverfahren bestimmt wird, der in einem Bereich von 200 bis 2200 mg/g umfasst ist;
- einer Calciumsulfat-Quelle;
- einer Calciumhydroxid-Quelle;
- mindestens einen alkalischen Katalysator, ausgewählt aus Natriumfluorid, Natriumaluminat, Trinatriumphosphat, Natrium-Orthosilicat, Natrium-Metasilicat, Natrium-Hexafluorsilicat, Natrium-Fluorphosphat, Natrium-Hexametaphosphat, Natriumcarbonat, Natriumborat, Natrium-Hexafluoraluminat, Kalium-Tetrafluoraluminat oder deren Gemischen; und

- mindestens einen Aktivator, der aus Verbindungen ausgewählt wird, die imstande sind, Kationen zu komplexieren, vorzugsweise Verbindungen, die imstande sind, Calcium, Aluminium und/oder Silizium zu komplexieren;

wobei das Gemisch aufweist:

- einen Calciumhydroxid-Sättigungsgrad, Sat(CH) genannt, der in einem Bereich von 0,75 bis 8 umfasst ist; und
- einen Calciumsulfat-Spiegel, RMK genannt, der in einem Bereich von 0,05 bis 1,25 umfasst ist; wobei die Parameter RMK und Sat(CH) nach Anspruch 1 definiert sind.

9. Verfahren zum Herstellen nach Anspruch 8, wobei die Temperatur, bei der das Gemisch durchgeführt wird, zwischen mehr als 0°C bis 50°C, vorzugsweise von 10°C bis 40°C, bevorzugter bei etwa 25°C liegt.

10. Verwendung des Ettringit-Bindemittels nach einem der Ansprüche 1 bis 7, zur Herstellung von Zementen, Mauerbindern, Mörteln, Betonen, Straßenbindemitteln und/oder formulierten Kalken.

**Claims**

1. Ettringitic binder comprising:

- at least one source of aluminosilicate **characterized by** a pozzolanic activity index (PIZ) determined by the Chapelle test method, in a range from 200 to 2200 mg/g;
- at least one source of calcium sulfate;
- at least one source of calcium hydroxide;
- at least one alkaline catalyst chosen from sodium fluoride, sodium aluminate, trisodium phosphate, sodium orthosilicate, sodium metasilicate, sodium hexafluorosilicate, sodium fluorophosphate, sodium hexametaphosphate, sodium carbonate, sodium borate, sodium hexafluoroaluminate, potassium tetrafluoroaluminate or mixtures thereof; and
- at least one activator selected from compounds capable of complexing cations, preferably compounds capable of complexing calcium, aluminum and/or silicon; said ettringitic binder being **characterized by**
- a calcium hydroxide saturation rate, denoted Sat(CH), in a range from 0.75 to 8; and
- a calcium sulfate rate, denoted RMK, in a range from 0.05 to 1.25; the RMK parameter being defined by the following equation

$$RMK = \frac{[Qm(C\$) \times 592000]}{IPZ \times Q(MK) \times 3}$$

wherein:

IPZ represents the pozzolanic index of the aluminosilicate source;
Q(MK) represents the quantity in grams of aluminosilicates present in the ettringitic binder; and
Qm(C\$) represents the amount in moles of calcium sulfate present in the ettringitic binder.

2. Ettringitic binder according to claim 1, in which the activator is selected from sucrose, alpha-hydroxy acids or their salts, ethanolamines or their salts, and/or catechols or its derivatives.

3. Ettringitic binder according to claim 1 or claim 2, in which the amount of catalyst is in a range of more than 0% to 20% by mass relative to the total amount of the binder.

4. Ettringitic binder according to any one of claims 1 to 3, in which the source of aluminosilicate is a pozzolan, a fine from the production of chamotte or ash from paper mill sludge, preferably a metakaolin.

5. Ettringitic binder according to any one of claims 1 to 4, wherein the source of calcium hydroxide is slaked lime, hydraulic lime, quicklime, delayed quicklime, air lime, conventional slaked lime or any commercial lime.

6. Ettringitic binder according to any one of claims 1 to 5, wherein the source of calcium sulfate is selected from anhydrite, natural gypsum or gypsum obtained as a by-product of industrial reactions such as desulfogypsum, titanogypsum, fluogypsum or phosphogypsum.

7. Ettringitic binder according to any one of claims 1 to 6, further comprising additives, preferably slags, more preferably blast furnace slags or amorphous aluminate slags.

8. Process for preparing an ettringitic binder according to any one of claims 1 to 7, comprising mixing at least:

> - a source of aluminosilicate **characterized by** a pozzolanic activity index (PIZ) determined by the Chapelle test method, in a range of 200 to 2200 mg/g;
> - a source of calcium sulfate;
> - a source of calcium hydroxide;
> - at least one alkaline catalyst chosen from sodium fluoride, sodium aluminate, trisodium phosphate, sodium orthosilicate, sodium metasilicate, sodium hexafluorosilicate, sodium fluorophosphate, sodium hexametaphosphate, sodium carbonate, sodium borate, sodium hexafluoroaluminate, potassium tetrafluoroaluminate or mixtures thereof; and
> - at least one activator chosen from compounds capable of complexing cations, preferably compounds capable of complexing calcium, aluminum and/or silicon,

said mixture having:

> - a saturation rate of calcium hydroxide, denoted Sat(CH), in a range from 0.75 to 8; and
> - a calcium sulfate rate, denoted RMK, in a range from 0.05 to 1.25; the parameters RMK and Sat(CH) being defined according to claim 1.

9. Preparation process according to claim 8, in which the temperature at which the mixing is carried out is from more than 0°C to 50°C, preferably from 10°C to 40°C, more preferably at approximately 25°C.

10. Use of the ettringitic binder according to any one of claims 1 to 7, for the preparation of cements, masonry cements, mortars, concretes, road binders and/or formulated lime.

FIG. 1

FIG. 2

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 8804285 A
- WO 03091179 A
- US 2014360721 A